# EUROPEAN PATENT SPECIFICATION

(11) **EP 1 401 775 B1**
(45) Date of publication and mention of the grant of the patent: **21.11.2012**
(21) Application number: 02730654.7
(22) Date of filing: 09.05.2002
(51) Int. Cl.: C02F 3/06

(54) **METHOD, APPARATUS AND BIOMASS SUPPORT ELEMENT FOR BIOLOGICAL WASTEWATER TREATMENT**
VERFAHREN, VORRICHTUNG UND BIOMASSENTRAGELEMENT FÜR DIE BIOLOGISCHE ABWASSERBEHANDLUNG
PROCEDE, APPAREIL ET STRUCTURE DE SUPPORT DE BIOMASSE POUR LA BIOEPURATION DES EAUX USEES

(30) Priority: 29.05.2001 US 866886; 07.01.2002 US 41524
(43) Date of publication of application: 31.03.2004
(73) Proprietor: Aqwise - Wise Water Technologies Ltd, 42504 Netanya (IL)
(72) Inventor: SHECHTER, Ronen, Itzhak, 36530 Kiryat Tivon (IL); LEVY, Eitan, Baruch, 48570 Rosh Ha'ayin (IL)
(74) Representative: Hill, Christopher Michael
(86) International application number: PCT/IL2002/000359
(87) International publication number: WO 2002/096806

(56) References cited:
- DE-A- 3 916 520
- US-A- 1 790 975
- US-A- 2 709 128
- US-A- 3 133 017
- US-A- 4 188 289
- US-A- 4 810 377
- US-A- 5 080 793
- US-A- 5 458 779
- US-A- 5 490 934
- US-A- 5 779 886
- DATABASE WPI Week 198730 Derwent Publications Ltd., London, GB; AN 1987-209691 XP002381758 & JP 62 136296 A (IIDA K) 19 June 1987 (1987-06-19)
- DATABASE WPI Week 199901 Derwent Publications Ltd., London, GB; AN 1999-003480 XP002381759 & JP 10 277536 A (NKG INSULATORS LTD) 20 October 1998 (1998-10-20)
- PATENT ABSTRACTS OF JAPAN vol. 1996, no. 02, 29 February 1996 (1996-02-29) & JP 07 275886 A (KUBOTA CORP), 24 October 1995 (1995-10-24)

## Description

### FIELD OF THE INVENTION

The present invention relates to water treatment generally and more particularly to systems and methodologies for biological water treatment and the use of biofilm supports.

### REFERENCE TO RELATED APPLICATIONS

This application claims priority from US Patent Application No. 09/866,886, filed on May 29, 2001, entitled "Method and Apparatus For Biological Wastewater Treatment" and from US Patent Application No. 10/041,524, filed on January 7, 2002, entitled "Biofilm Carrier, Method of Manufacture Thereof and Waste Water Treatment System Employing Biofilm Carrier".

### BACKGROUND OF THE INVENTION

The following patents and publications are believed to represent the current state of the art:
US Patents 3,133,017; 4,045,344; 4,137,171; 4,231,863; 4,256,573; 4,374,730; 4,394,268; 4,521,311; 4,454,038; 4,521,311; 4;566,971; 4,599,174; 4,810,377; 4,820,415; 4,839,053; 5,030,353; 5,200,081; 5,202,027; 5,554,289; 5,698,094 and 6,036,863. French Patent FR 2,707,183.
A NEW PROCESS FOR ENRICHING NITRIFIERS IN ACTIVATED SLUDGE THROUGH SEPARATE HETEROTROPHIC WASTING FROM BIOFILM CARRIERS by Denny S. Parker, Bjorn Rusten, Asgeir Wien and Jon G. Siljudalen, Brown and Caldwell, P.O. Box 8045 Walnut Creek, CA 94596-1220, WEFTEC 2000, Copyright 2000 Water Environment Federation;
PILOT STUDY TO FULL SCALE TREATMENT-THE MOVING BED BIOFILM REACTOR EXPERIENCE AT THE PHILLIPS 66 BORGER REFINERY by Chandler H. Johnson and Michael W. Page, WEFTEC 2000, Copyright 2000 Water Environment Federation;
UPGRADING TO NITROGEN REMOVAL WITH THE KMT MOVING BED BIOFILM PROCESS by Bjorn Rusten, Jon G. Siljudalen and Bjomar Nordeidet, Wat. Sci. Tech. Vol 29, No. 12, pp 185-195, 1994;
THE TWO STAGE MOVING BED/ACTIVATED SLUDGE PROCESS, AN EFFECTIVE SOLUTION FOR HIGH STRENGTH WASTES by Narinder Sunner, Chris Evans, Graig Siviter and Tom Bower, Water and Environmental Management, Volume 13, Number 5, October, 1999;
UPGRADING WASTEWATER TREATMENT PLANTS BY THE USE OF BIOFILM CARRIERS, OXYGEN ADDITION AND PRE-TREATMENT IN THE SEWER NETWORK by Anette Aesoy, Hallvard Odegaard, Marius Haegh, Frode Risla and Greta Bentzen, Water Science & Technology, Vol 37, Number 9,1998.
APPLICATION OF INVERSE FLUIDIZATION IN WASTEWATER TREATMENT: FROM LABORATORY TO FULL-SCALE BIOREACTORS, by D. G. Karamanev and L. N. Nikolov, Environmental Progress, Vol. 15, No. 3, pp 194-196, Fall 1996.

The following U. S. Patents are believed to represent the current state of the art in biofilm supports and related technologies:
5,980,738; 5,981,272; 5,985,148; 5,993,650; 6,063,268; 6,156,204; 5,948,262; 5,871,674; 5,783,066; 5,783,069; 6,126,829; 5,543,039; 5,458,779; 5,486,292; 4,985,182; 4,333,893; 5,217,616 ; 4,814,085; 4,814,125; 4,842,920; 5,168,058; 4,385,988; 4,522,767 and 4,537,731.

DE 3916520A1 discloses a biological clarifier vessel using aerobic-selective principle, comprising an insulated vertical cylindrical vessel divided into concentric zones for aeration, clarification and sedimentation. US 4,810,377 discloses a clarification device. US 4,188,289 discloses a process for purification of sanitary waters.

### SUMMARY OF THE INVENTION

The present invention seeks to provide improved systems and methodologies for biological water treatment.

The present invention provides a method for waste water treatment according to claim 1. Preferred features are defined in the dependent claims. The present invention also provides waste water treatment apparatus according to claim 10. Preferred features are defined in the dependent claims.

There is thus provided in accordance with a preferred embodiment of the present invention a method for retrofitting existing waste water treatment facilities having at least one existing basin. The method includes installing generally vertical partitions at spaced locations in at least one existing basin in order to divide the existing basin into a plurality of treatment stage regions, installing at least one air lift in each of the plurality of treatment stage regions, loading each treatment stage regions with a quantity of floatable porous particles, supplying waste water to at least one of the plurality of treatment stage regions and allowing the waste water, but generally not the particles, to flow from at least one of the plurality of treatment stage regions to at least another of the plurality of treatment stage regions and operating the air lift in each of the plurality of treatment stage regions to provide aerobic waste water flow therein in operative engagement with the floatable porous particles.

There is also provided in accordance with a preferred embodiment of the present invention a method for waste water treatment employing at least one basin. The method includes installing generally vertical partitions at spaced locations in at least one basin in order to divide the basin into a plurality of treatment stage regions, installing at least one air lift in each of the plurality of treatment stage regions, loading each treatment stage regions with a quantity of floatable porous particles, supplying waste water to at least one of the plurality of treatment stage regions and allowing the waste water, but generally not the particles, to flow from at least one of the plurality of treatment stage regions to at least another of the plurality of treatment stage regions and operating the air lift in each of the plurality of treatment stage regions to provide aerobic waste water flow therein in operative engagement with the floatable porous particles.

There is further provided in accordance with another preferred embodiment of the present invention a retrofitted waste water treatment apparatus. The apparatus includes at least one existing basin, generally vertical partitions located at spaced locations in the existing basin in order to divide the existing basin into a plurality of treatment stage regions, at least one air lift located in each of the plurality of treatment stage regions and a quantity of floatable porous particles loaded into each of the plurality of treatment stage regions, whereby supplying waste water to at least one of the plurality of treatment stage regions and allowing the waste water, but generally not the particles, to flow from at least one of the plurality of treatment stage regions to at least another of the plurality of treatment stage regions and operating the air lift in each of the plurality of treatment stage regions provides aerobic waste water flow therein in operative engagement with the floatable porous particles.

There is further provided in accordance with yet another preferred embodiment of the present invention a waste water treatment apparatus. The apparatus includes at least one basin, generally vertical partitions located at spaced locations in the basin in order to divide the basin into a plurality of treatment stage regions, at least one air lift located in each of the plurality of treatment stage regions and a quantity of floatable porous particles loaded into each of the plurality of treatment stage regions, whereby supplying waste water to at least one of the plurality of treatment stage regions and allowing the waste water, but generally not the particles, to flow from at least one of the plurality of treatment stage regions to at least another of the plurality of treatment stage regions and operating the air lift in each of the plurality of treatment stage regions provides aerobic waste water flow therein in operative engagement with the floatable porous particles.

Further in accordance with a preferred embodiment of the present invention at least some of the vertical partitions are spaced from a bottom of the basin in order to allow the waste water to flow thereunder between adjacent ones of the plurality of treatment stage regions.

Still further in accordance with a preferred embodiment of the present invention the air lift includes the air diffuser disposed underlying a peripheral enclosure which defines a column of water and is lifted by air diffusing upwardly from the air diffuser therethrough.

Additionally in accordance with a preferred embodiment of the present invention the peripheral enclosure includes a cylindrical enclosure. Alternatively, the peripheral enclosure includes a plurality of spaced generally vertical walls, which extend between walls of the basin and are separated from the bottom of the basin.

Further in accordance with a preferred embodiment of the present invention the floatable particles include porous plastic particles having a density lower than that of pure water. Preferably, the particles have a specific gravity between 0.65 and 0.95 and have an irregular shape, whose largest dimension is generally between 4 - 10 mm.

Additionally in accordance with a preferred embodiment of the present invention, the particles have a total porosity exceeding 50% and have a mean pore diameter of pores, whose diameter exceeds 10 microns, of about 20 microns.

Further in accordance with a preferred embodiment of the present invention the generally vertical partitions divide the basin into between 4 and 12 process stages.

Still further in accordance with a preferred embodiment of the present invention the air lift includes a series of air lifts arranged in the multiple process stages. Preferably, the series of air lifts includes at each process stage an initial air lift assembly and at least one intermediate air lift assembly. The initial air lift assembly typically includes a upstream partition, which extends downwardly from a top location above a water level in the basin to a bottom location spaced from the bottom of the basin.

Further in accordance with a preferred embodiment of the present invention the upstream partition extends fully from side to side of the basin.

Additionally or alternatively the upstream partition is attached to a deflector, which extends in a downstream direction from the upstream partition at the water level.

Still further in accordance with a preferred embodiment of the present invention the initial air lift assembly also includes a downstream partition which extends fully from side to side of the basin but does not extend up to the water level.

Moreover in accordance with a preferred embodiment of the present invention the intermediate air lift assembly includes an upstream partition, which extends downwardly from a top location below the water level in basin to a bottom location spaced from the bottom of the basin.

Further in accordance with a preferred embodiment of the present invention the vertical partitions each extend fully from side to side of the basin.

Additionally in accordance with a preferred embodiment of the present invention the intermediate air lift assembly includes an upstream partition separated from a deflector plate, which extends in a downstream direction from the upstream partition at the water level. Preferably, the intermediate air lift assembly also includes a downstream partition, which does not extend up to the water level or as close to the bottom of the basin as does the upstream partition.

Still further in accordance with a preferred embodiment of the present invention the step of installing also includes installing a final air lift assembly including an upstream partition which extends downwardly from a top location below the water level in the basin to a bottom location spaced from the bottom of the basin and extends fully from side to side of the basin. Preferably, the final air lift assembly also includes a downstream partition, which also extends fully from side to side of the basin and extends to a top location above the water level and closer to the bottom than does the upstream partition. Additionally or alternatively, the downstream partition is attached to a deflector plate, which extends in an upstream direction from downstream partition at a location at the water level.

Further in accordance with a preferred embodiment of the present invention the air lift includes a plurality of air lift assemblies each including upstream and downstream partitions: a first plurality of air diffusers are disposed at the bottom of the basin intermediate upstream and downstream partitions of the plurality of air lift assemblies and a second plurality of air diffusers, lesser in number than the first plurality of air diffusers, are disposed at the bottom of the basin intermediate the plurality of air lift assemblies.

Preferably, the first plurality of air diffusers intermediate the upstream and downstream partitions of each air lift assembly causes water to flow upward between the upstream and downstream partitions of each air lift assembly. Additionally, the second plurality of air diffusers intermediate the plurality of air lift assemblies allows water to flow downward.

Still further in accordance with a preferred embodiment of the present invention the step of loading includes loading 10 - 40 percent of the volume of the basin with particles in absence of water flow.

Additionally in accordance with a preferred embodiment of the present invention the step of supplying includes providing a continuous flow of water from the upstream side of the basin from the waste water inlet to the treated water outlet. Typically, the flow is an undulating flow and includes passage under upstream partitions, which is of relatively low volume and generally does not carry floating particles into the air lift, thereby constraining the particles to reside outside of and between the air lift.

Further in accordance with a preferred embodiment of the present invention, the method also includes controlling the flow velocity of water by controlling operation of the first and second pluralities of air diffusers.

Further in accordance with a preferred embodiment of the present invention the air lift includes an adjustable angle deflector.

Still further in accordance with a preferred embodiment of the present invention the air lift includes an integral curved downstream partition and deflector.

Further in accordance with a preferred embodiment of the present invention the method also includes installing a denitrification unit in at least one of the plurality of treatment stage regions. Preferably, the denitrification unit includes a plurality of axial pumps, which provide lift generally without an air flow, thereby to provide an anoxic de-nitrification process.

Further in accordance with a preferred embodiment of the present invention the air lift includes an array of air lifts and wherein the array of air lifts includes a multiplicity of cylindrical air lifts arranged in the plurality of treatment stage regions and separated by the vertical partitions which extend from a bottom location and is spaced from a bottom of the basin by a first vertical separation.

Preferably the cylindrical air lifts each include: a hollow shaft which extends from a bottom location spaced from a bottom of the basin by a second vertical separation which exceeds the first separation, a deflector which is disposed in spaced relationship over each hollow shaft and is disposed at the water level and at least one air diffuser which is disposed underlying each hollow shaft to provide an air lift therethrough, thereby causing water to flow into the hollow shafts and upwardly through the hollow shafts, the deflectors causing the water exiting the tops of the hollow shafts to move sideways and downwardly.

Additionally in accordance with a preferred embodiment of the present invention the cylindrical air lifts also includes a plurality of air diffusers disposed immediately upstream of each the vertical partition for providing control of particle movement and prevention of particle migration.

Further in accordance with a preferred embodiment of the present invention the step of operating produces fluidization of the particles. Preferably, the operating step is operative, when the particles become heavily coated with biomass to cause the particles sometimes to enter the air lift and to be sloughed of some of the biomass as they are propelled upwards by the action of the air lift.

In accordance with a preferred embodiment of the present invention the floatable biomass support elements comprise a plurality of plastic biofilm support elements, formed of a plastic material mixed with a foaming agent, each including a plurality of radially extending surfaces extending outwardly from a generally solid centre, each of said plurality of support elements having a maximum dimension which does not exceed 50 mm, specific gravity of between approximately 0.70 - 0.91 and a generally cylindrical configuration.

In accordance with a preferred embodiment of the present invention, each of said plurality of plastic biofilm support elements has a plurality of roughened biofilm adherence surfaces integrally formed as one piece therewith.

Also described herein is a method of manufacturing a plastic biofilm support element including:
extruding a plastic material mixed with a foaming agent to produce an elongate extruded plastic material having a specific gravity of between approximately 0.70 - 0.91;
cooling the elongate extruded plastic material; and
cutting the elongate extruded plastic material to have a maximum dimension, which does not exceed 50 mm.

Also described herein is a method of manufacturing a plastic biofilm support element including:
extruding a plastic material mixed with a foaming agent to produce an elongate extruded plastic material having a generally cylindrical configuration and including a plurality of radially extending surfaces extending outwardly from a generally solid center;
cooling the elongate extruded plastic material; and
cutting the elongate extruded plastic material to have a maximum dimension, which does not exceed 50 mm.

There is also described herein a method of manufacturing a plastic biofilm support element including:
extruding a plastic material mixed with a foaming agent to produce an elongate extruded plastic material having a plurality of roughened biofilm adherence surfaces integrally formed as one piece therewith;
cooling the elongate extruded plastic material; and
cutting the elongate extruded plastic material to have a maximum dimension, which does not exceed 50 mm.

Preferably, the plastic biofilm support element has a generally cylindrical configuration and includes a plurality of radially extending surfaces extending outwardly from a generally solid center.

The plastic biofilm support element may have a plurality of roughened biofilm adherence surfaces integrally formed as one piece therewith.

Preferably, the plurality of radially extending ribs includes between 5 and 9 rips.

Preferably each of the plurality of ribs has a thickness of between 0.5 and 2 mm.

Preferably, the plastic biofilm support element includes a strip extending along an outwardly facing edge of each of the radially extending ribs.

The plastic biofilm support element may be formed of a plastic material selected from the following plastic materials: polyolefin, polystyrene, polyvinyl chloride and polyurethane.

Preferably, the plastic biofilm support element is formed of a plastic material mixed with a foaming agent.

The plurality of ribs and the strips may be configured so as to prevent interdigitation between ribs of two separate biofilm support elements.

Preferably, the support is configured so as to prevent mechanically retained joining of two separate biofilm support elements.

Preferably, the plastic biofilm support element has a specific gravity of between approximately 0.75 - 0.89 and more preferably between approximately 0.81 - 0.87.

Preferably, the roughened biofilm adherence surfaces have a roughness average (Ra) in the range of 100 - 800 microns and more preferably in the range of 200 - 500 microns.

Preferably, the plurality of radially extending surfaces are defined by a plurality.of radially extending ribs.

There is also described herein a method for retrofitting existing waste water treatment facilities having at least one existing basin. The method includes installing generally vertical partitions at spaced locations in the existing basin in order to divide the existing basin into a plurality of treatment stage regions, installing at least one air lift in each of the plurality of treatment stage regions, loading each treatment stage regions with a quantity of floatable biomass support elements, supplying waste water to at least one of the plurality of treatment stage regions and allowing the waste water, but generally not the biomass support elements, to flow from the plurality of treatment stage regions to at least another of the plurality of treatment stage regions and operating the air lift in each of the plurality of treatment stage regions to provide aerobic waste water flow therein in operative engagement with the floatable porous biomass support elements.

There is further provided in accordance with a preferred embodiment of the present invention a method for waste water treatment employing at least one basin. The method includes installing generally vertical partitions at spaced locations in the basin in order to divide the basin into a plurality of treatment stage regions, installing at least one air lift in each of the plurality of treatment stage regions, loading each treatment stage regions with a quantity of floatable biomass support elements, supplying waste water to at least one of the plurality of treatment stage regions and allowing the waste water, but generally not the biomass support elements, to flow from the plurality of treatment stage regions to at least another of the plurality of treatment stage regions and operating the air lift in each of the plurality of treatment stage regions to provide aerobic waste water flow therein in operative engagement with the floatable porous biomass support elements.

There is further provided herein a retrofitted waste water treatment apparatus including at least one existing basin, generally vertical partitions located at spaced locations in the existing basin in order to divide the existing basin into a plurality of treatment stage regions, at least one air lift located in each of the plurality of treatment stage regions and a quantity of floatable biomass support elements loaded into each of the plurality of treatment stage regions, whereby supplying waste water to at least one of the plurality of treatment stage regions and allowing the waste water, but generally not the biomass support elements, to flow from the plurality of treatment stage regions to at least another of the plurality of treatment stage regions and operating the air lift in each of the plurality of treatment stage regions provides aerobic waste water flow therein in operative engagement with the floatable biomass support elements.

There is also provided in accordance with another preferred embodiment of the present invention a waste water treatment apparatus including at least one basin, generally vertical partitions located at spaced locations in the basin in order to divide the basin into a plurality of treatment stage regions, at least one air lift located in each of the plurality of treatment stage regions and a quantity of floatable biomass support elements loaded into each of the plurality of treatment stage regions, whereby supplying waste water to at least one of the plurality of treatment stage regions and allowing the waste water, but generally not the biomass support elements, to flow from at least one of the plurality of treatment stage regions to at least another of the plurality of treatment stage regions and operating the at least one air lift in each of the plurality of treatment stage regions provides aerobic waste water flow therein in operative engagement with the floatable porous biomass support elements.

Further in accordance with a preferred embodiment of the present invention the vertical partitions are spaced from a bottom of the basin in order to allow the waste water to flow thereunder between adjacent ones of the plurality of treatment stage regions.

Still further in accordance with a preferred embodiment of the present invention the air lift includes at least one air diffuser disposed underlying a peripheral enclosure which defines a column of water which is lifted by air diffusing upwardly from the at least one air diffuser therethrough.

Additionally in accordance with a preferred embodiment of the present invention the peripheral enclosure includes a rectangular cylindrical enclosure.

Moreover in accordance with a preferred embodiment of the present invention the peripheral enclosure includes a plurality of spaced generally vertical walls, which extend between walls of the basin and are separated from the bottom of the basin.

Typically, the generally vertical partitions divide the basin into between 4 and 12 process stages.

Further in accordance with a preferred embodiment of the present invention the air lift includes a series of air lifts arranged in the multiple process stages.

Preferably, the lift includes a plurality of air lift assemblies and wherein at least one of the plurality of air lift assemblies include an upstream partition which extends downwardly from a top location below the water level in basin to a bottom location spaced from the bottom of the basin.

Still further in accordance with a preferred embodiment of the present invention the vertical partitions each extend fully from side to side of the basin.

Additionally in accordance with a preferred embodiment of the present invention the air lift assembly also includes a downstream partition, which extends downwardly from a top location below the water level in the basin to a bottom location spaced from the bottom of the basin.

Still further in accordance with a preferred embodiment of the present invention the air lift includes a plurality of air lift assemblies each including upstream and downstream partitions, a first plurality of air diffusers are disposed at the bottom of the basin intermediate the plurality of air lift assemblies and a second plurality of air diffusers, lesser in number than the first plurality of air diffusers, are disposed at the bottom of the basin intermediate the upstream and downstream partitions of the plurality of air lift assemblies.

Preferably, the first plurality of air diffusers intermediate the air lift assemblies cause water to flow upward between the air lift assemblies.

Further in accordance with a preferred embodiment of the present invention the second plurality of air diffusers intermediate the upstream and downstream partitions of each air lift assembly allows water to flow downward between the upstream and downstream partitions.

Typically, the loading includes loading 10 - 40 percent of the volume of the basin with biomass support elements.

Further in accordance with a preferred embodiment of the present invention the step of supplying includes providing a continuous flow of water from the upstream side of the basin from the waste water inlet to the treated water outlet.

Additionally in accordance with a preferred embodiment of the present invention the flow includes passage under stage separation partitions which does not carry floating biomass support elements across the stage separation partition, thereby constraining the biomass support elements of each stage to reside within that stage and preventing migration of biomass support elements across stage partition assemblies.

Further in accordance with a preferred embodiment of the present invention the method also includes controlling the flow velocity of water by controlling operation of the first and second pluralities of air diffusers.

Still further in accordance with a preferred embodiment of the present invention the method further includes installing a de-nitrification unit in at least one of the plurality of treatment stage regions.

Typically, the de-nitrification unit includes at least one axial pump, which provides lift generally without an air flow, thereby to provide an anoxic denitrification process.

Typically the de-nitrification also includes unit includes at least one agitator which provides lift generally without an air flow, thereby to provide an anoxic de-nitrification process.

Further in accordance with a preferred embodiment of the present invention the air lift includes an array of air lifts and wherein the array of air lifts includes a multiplicity of rectangular cylindrical air lifts arranged in the plurality of treatment stage regions and separated by the vertical partitions which extend from a bottom location which is spaced from a bottom of the basin by a first vertical separation.

Preferably, the cylindrical air lifts each include a hollow shaft which extends from a bottom location spaced from a bottom of the basin by a second vertical separation which exceeds the first separation and a plurality of air diffusers which are disposed intermediate the hollow shaft to provide an air lift therethrough, thereby causing water to flow into the hollow shafts and downwardly through the hollow shafts.

Typically, the step of operating produces fluidization of the biomass support elements.

Still further in accordance with a preferred embodiment of the present invention the vertical partitions include a first generally vertical partition having respective upstream and downstream surfaces, the first generally vertical partition extending downwardly from a top location above the level of the water in the basin to a bottom location spaced from the bottom of the basin and extending from side to side of the basin, second and third generally vertical partitions disposed adjacent and in spaced relationship with respect to the upstream and downstream surfaces of the first generally vertical partition, the second and third generally vertical partitions extending from side to side of the basin, and extending upwardly from the bottom of the basin to a top location below the level of water in the basin and upwardly inclined flow director panels disposed on respective upstream and downstream surfaces of the first generally vertical partition and being disposed above and spaced from the second and third generally vertical partitions.

Additionally in accordance with a preferred embodiment of the present invention the first plurality of air diffusers intermediate adjacent air lift assemblies and intermediate adjacent airlift assembly and stage partition assembly causes water to flow upward between the adjacent air lift assemblies and between adjacent airlift assembly and stage partition assembly.

### BRIEF DESCRIPTION OF THE DRAWINGS

The present invention will be understood and appreciated more fully from the following detailed description, taken in conjunction with the drawings in which:
Figs. 1A and 1B are simplified illustrations of two types of prior art waste water treatment systems, which respectively employ surface aerators and diffused air aeration;
Fig. 2 is a simplified illustration of a waste water treatment system of the type of Fig. 1A or Fig. 1B in accordance with a preferred embodiment of the present invention;
Fig. 3 is a sectional illustration taken along lines III - III in Fig. 2;
Fig. 4 is a simplified illustration of the embodiment of Figs. 2 and 3 showing water flows;
Fig. 5 is a sectional illustration taken along lines V - V in Fig. 4, showing water flows;
Fig. 6 is a sectional illustration corresponding to Fig. 3 and showing particles located in the embodiment of Fig. 2 in the absence of fluid flow;
Fig. 7 is a sectional illustration corresponding to Fig. 6 and showing water flows and fluidization of particles thereby;
Figs. 8A, 8B, 8C and 8D are simplified illustrations of four embodiments of a unidirectional rectangular airlift used in the embodiment of Figs. 2 - 7;
Figs. 9A, 9B, 9C and 9D are simplified illustrations of four embodiments of a bidirectional rectangular airlift used in the embodiment of Figs. 2 - 7;
Fig. 10 is a simplified illustration of a denitrification unit useful in the embodiment of Figs. 2 - 7;
Fig. 11 is a simplified illustration of a embodiment of a waste water treatment system of the type of Fig. 1A or Fig. 1B in accordance with another embodiment of the present invention;
Fig. 12 is a sectional illustration taken along lines XII - XII in Fig. 11;
Fig. 13 is a sectional illustration corresponding to Fig. 12 and showing water flows;
Fig. 14 is a sectional illustration corresponding to Fig. 12 and showing particles located in the embodiment of Fig. 11 in the absence of fluid flow;
Fig. 15 is a sectional illustration corresponding to Fig. 14, showing water flows and fluidization of particles thereby;
Fig. 16 is a simplified illustration of a denitrification unit useful in the embodiment of Figs. 11-15;
Figs. 17A, 17B, 17C, 17D and 17E are simplified illustrations of various deflectors useful in the embodiment of Figs. 11 - 15;
Figs. 18A and 18B are respective simplified pictorial and sectional illustrations of a biofilm support constructed and operative in accordance with a preferred embodiment of the present invention;
Figs. 19A and 19B are respective simplified pictorial and sectional illustrations of a biofilm support constructed and operative in accordance with another preferred embodiment of the present invention;
Fig. 20 is a simplified illustration of a methodology for forming a biofilm support
Figs. 21 and 22 are simplified illustrations of a portion of a waste water treatment system and methodology in accordance with a preferred embodiment of the present invention employing a biofilm support.
Fig. 23 is a simplified illustration of a embodiment of a waste water treatment system of the type of Fig. 1A or Fig. 1B in accordance with another preferred embodiment ot the present invention;
Fig. 24 is a sectional illustration taken along lines XXIV - XXIV in Fig. 23;
Fig. 25 is a simplified illustration of the embodiment of Figs. 23 and 24 showing water flows;
Fig. 26 is a sectional illustration taken along lines XXVI - XXVI in Fig. 25, showing water flows;
Fig. 27 is a sectional illustration corresponding to Fig. 24 and showing particles located in the embodiment of Fig. 23 in the absence of fluid flow;
Fig. 28 is a sectional illustration corresponding to Fig. 27 and showing water flows and fluidization of particles thereby;
Figs. 29A and 29B are simplified illustrations of two embodiments of a stage partition assembly including a carrier barrier employed in the embodiment of Figs. 23 - 28;
Fig. 30 is a graph illustrating preferred parameters of the stage partition assembly of Figs. 29A and 29B;
Fig. 31 is a simplified illustration of a embodiment of a waste water treatment system of the type of Fig. 1A or Fig. 1B in accordance with another preferred embodiment of the present invention;
Fig. 32 is a sectional illustration taken along lines XXXII - XXXII in Fig. 31;
Fig. 33 is a simplified illustration of the embodiment of Figs. 31 and 32 showing water flows;
Fig. 34 is a sectional illustration taken along lines XXXIV - XXXIV in Fig. 33, showing water flows;
Fig. 35 is a sectional illustration corresponding to Fig. 32 and showing particles located in the embodiment of Fig. 32 in the absence of fluid flow;
Fig. 36 is a sectional illustration corresponding to Fig. 35 and showing water flows and fluidization of particles thereby; and
Figs. 37A and 37B are simplified illustrations of two embodiments of a stage partition assembly including a carrier barrier employed in the embodiment of Figs. 31 - 36.

### DETAILED DESCRIPTION OF PREFERRED EMBODIMENTS

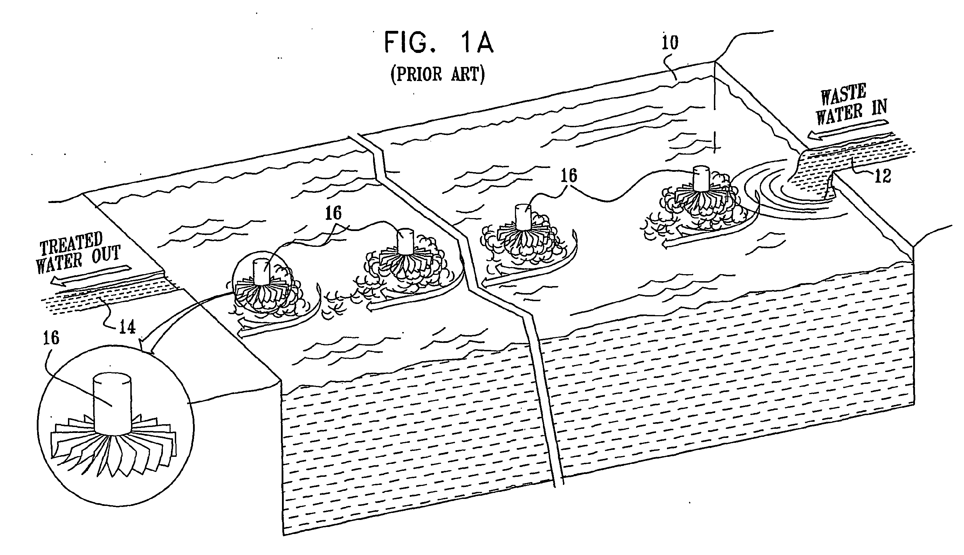

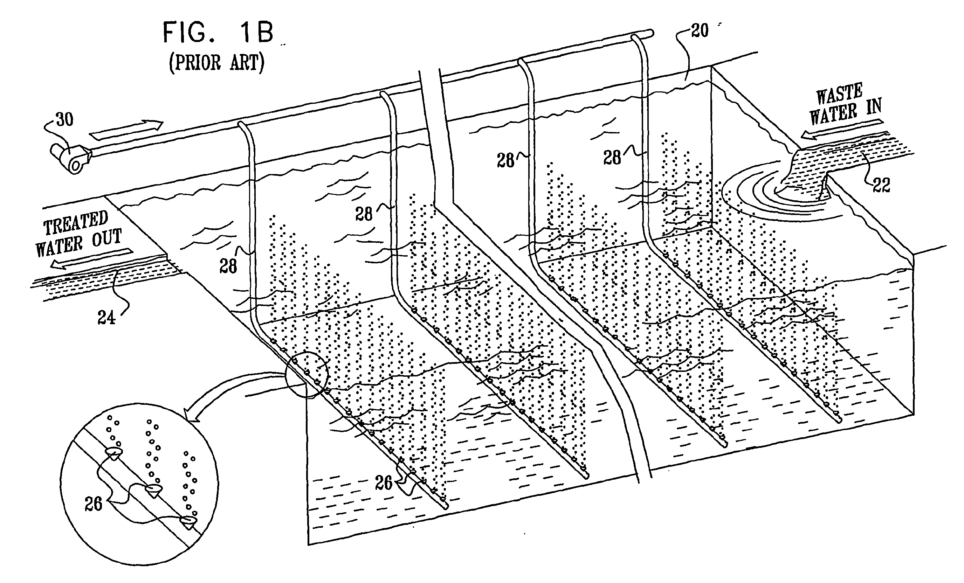

Reference is now made to Figs. 1A and 1B, which are simplified illustrations of two types of prior art waste water treatment systems, which respectively employ surface aerators and diffused air aeration.

As seen in Fig. 1A, one conventional type of prior art waste water treatment system comprises a basin 10 having a waste water inlet 12 and a treated water outlet 14. A plurality of surface aerators 16 are disposed at the water level of water in basin 10 and are operative to aerate the water therein, thus promoting biological activity and biological decomposition of organic material therein.

Another conventional type of prior art waste water treatment system is shown in Fig. 1B and comprises a basin 20 which may be identical to basin 10 (Fig. 1), having a waste water inlet 22 and a treated water outlet 24. A plurality of air diffusers 26 are disposed at the bottom of basin 20 and are coupled by air conduits 28 to an air blower 30. Operation of blower 30 causes air to bubble upwardly through waste water in basin 20, thus promoting biological activity and biological decomposition of organic material therein.

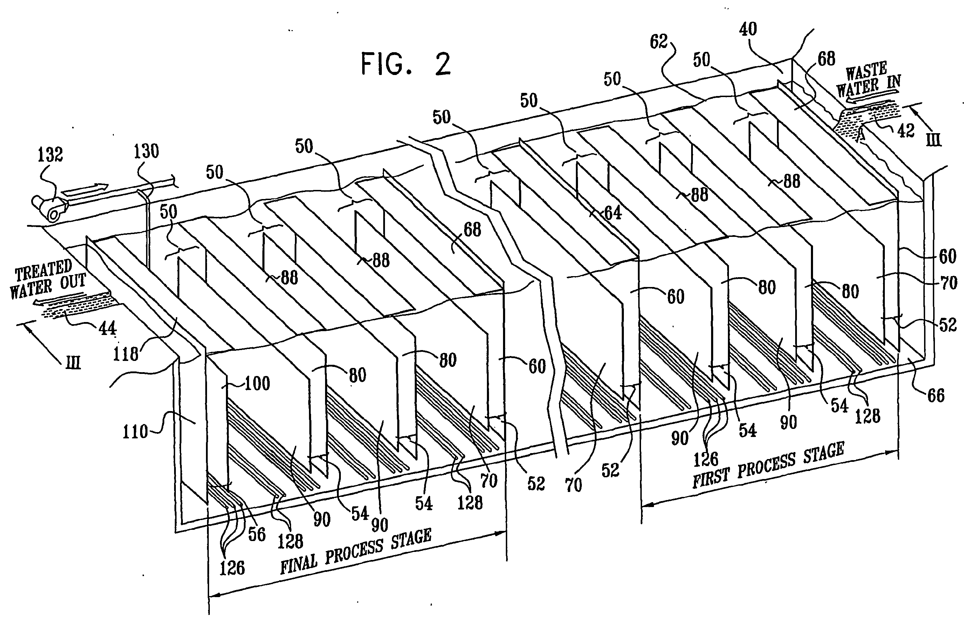

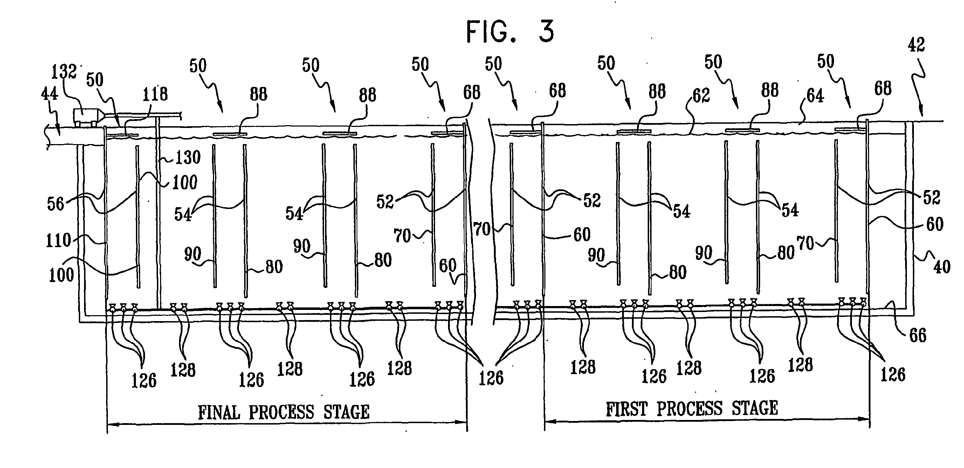

Reference is now made to Figs. 2 and 3, which are simplified illustrations of a waste water treatment system of the type of Fig. 1A or Fig. 1B in accordance with a preferred embodiment of the present invention. The system of Figs. 2 and 3 may or may not be a retrofit of an existing system. As shown in Figs. 2 and 3, it is a particular feature of the present invention that a series of air lifts are fitted into a conventional waste water treatment system including a basin 40 having a waste water inlet 42 and a treated water outlet 44.

In accordance with a preferred embodiment of the invention, a series of air lifts 50 is arranged in multiple process stages, typically 4 - 12 in number. Each process stage includes an initial air lift assembly, here designated by reference numeral 52 and at least one intermediate air lift assembly, here designated by reference numeral 54. A final process stage preferably includes a final air lift assembly, here designated by reference numeral 56.

Initial air lift assembly 52 preferably includes a upstream partition 60 which preferably extends downwardly from a top location above the water level 62 in basin 40 to a bottom location spaced from the bottom 66 of basin 40 and preferably extends fully from side to side of the basin 40. In the initial air lift assembly 52, the upstream partition is attached to a deflector plate 68 which extends in a downstream direction from upstream partition 60 at a location preferably generally at the water level 62. The initial air lift assembly 52 preferably also includes a downstream partition 70 which also extends fully from side to side of the basin 40 but does not extend up to the water level 62 or as close to the bottom 66 as does partition 60.

Each intermediate air lift assembly 54 preferably includes an upstream partition 80 which preferably extends downwardly from a top location below the water level 62 in basin 40 to a bottom location spaced from the bottom 66 of basin 40 and preferably extends fully from side to side of the basin 40. In the intermediate air lift assembly 54, the upstream partition 80 is separated from a deflector plate 88 which extends in a downstream direction from upstream partition 80 at a location preferably generally at the water level 62. The intermediate air lift assembly 54 preferably also includes a downstream partition 90 which also extends fully from side to side of the basin 40 but does not extend up to the water level 62 or as close to the bottom 66 as does partition 80. The top of downstream partition 90 is preferably at the same level as is the top of upstream partition 80.

Final air lift assembly 56 preferably includes an upstream partition 100 which preferably extends downwardly from a top location below the water level 62 in basin 40 to a bottom location spaced from the bottom 66 of basin 40 and preferably extends fully from side to side of the basin 40. The final air lift assembly 56 preferably also includes a downstream partition 110 which also extends fully from side to side of the basin 40 and extends to a top location above the water level 62 and closer to the bottom 66 than does partition 110. In the final air lift assembly 56, the downstream partition 110 is attached to a deflector plate 118 which extends in an upstream direction from downstream partition 110 at a location preferably generally at the water level 62.

It is noted that in the embodiment of Figs. 2 and 3 a first plurality of air diffusers 126 are disposed at the bottom of basin 40 intermediate the upstream and downstream partitions of each air lift assembly and a second plurality of air diffusers 128, typically lesser in number than the first plurality of air diffusers are disposed at the bottom of basin 40 intermediate adjacent air lift assemblies. All of the air diffusers are coupled by air conduits 130 to one or more air blowers 132.

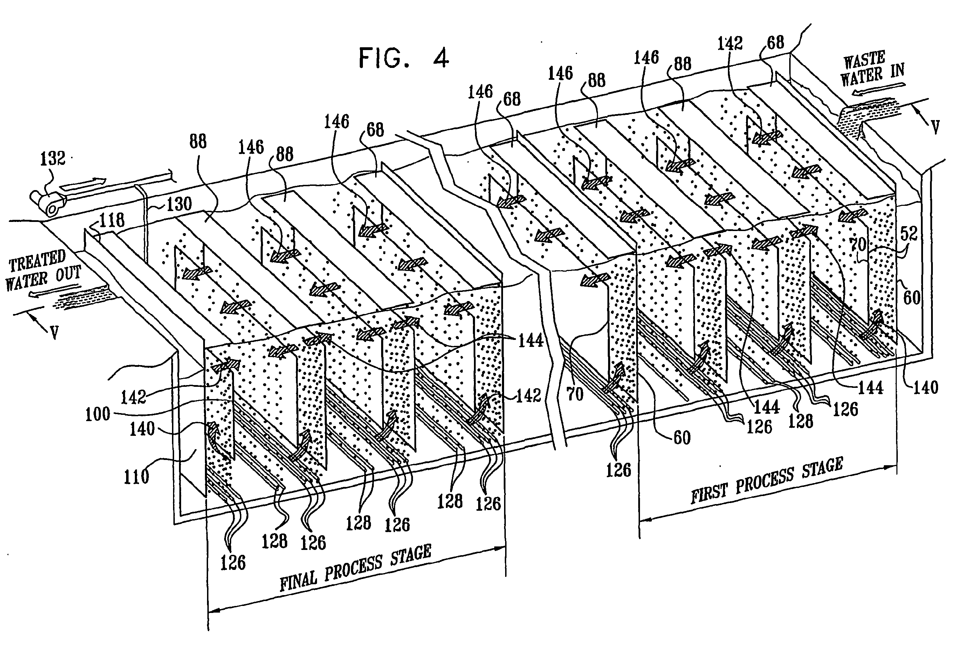

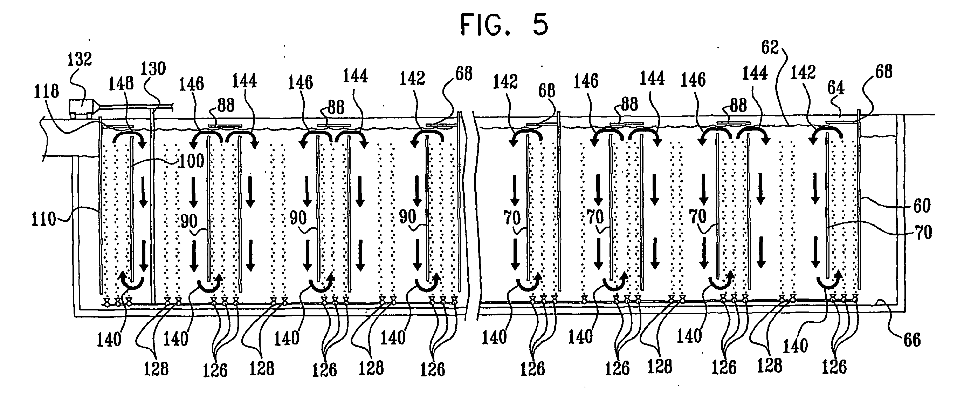

Reference is now made to Figs. 4 and 5, which are simplified illustrations of the embodiment of Figs. 2 and 3 showing water flows. As seen in Figs. 4 and 5, the relatively high density of air diffusers intermediate the upstream and downstream partitions of each air lift assembly causes water to flow upward between the upstream and downstream partitions of each air lift assembly, as indicated by arrows 140. The relatively lower density of air diffusers intermediate adjacent air lift assemblies allows water to flow downward.

Due to the construction of the initial airlift assemblies 52, water flows only in a downstream direction at the top of each initial airlift assembly 52, as indicated by arrows 142. Due to the different construction of the intermediate airlift assemblies 54, water flows in both upstream and downstream directions, indicated by respective arrows 144 and 146, at the top of each intermediate airlift assembly 54. Due to the construction of the final airlift assembly 56, water flows only in an upstream direction, indicated by arrows 148, at the top the final airlift assembly 56.

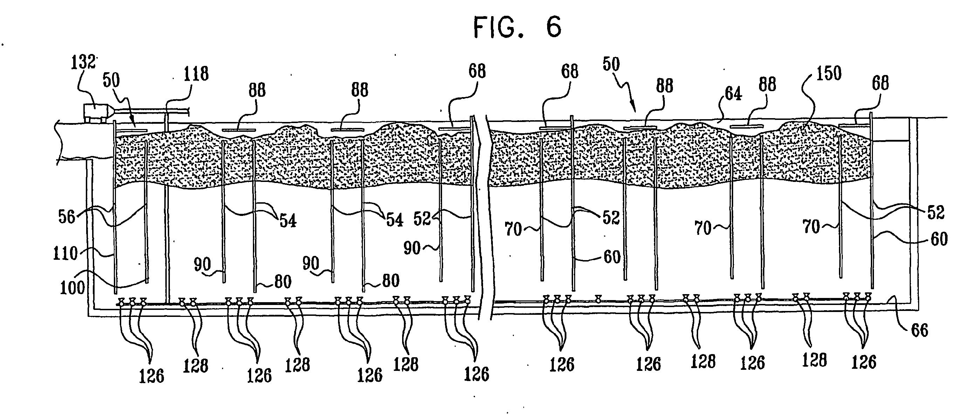

Reference is now made to Fig. 6, which is a sectional illustration corresponding to Fig. 3 and showing particles 150 preferably located in the embodiment of Fig. 2 in the absence of fluid flow. Particles 150 are preferably floating porous plastic particles having a density lower than that of pure water, preferably having a specific gravity between 0.65 and 0.95. Typically, the particles have an irregular shape, whose largest dimension is approximately 4 - 10 mm and preferably about 6 mm. Preferably the particles have a total porosity exceeding 50% and a preferred mean pore diameter of pores, whose diameter exceeds 10 microns, of about 20 microns.

As seen in Fig. 6, preferably 10 - 40 percent of the volume of the basin is filled with particles 150 in the absence of water flow.

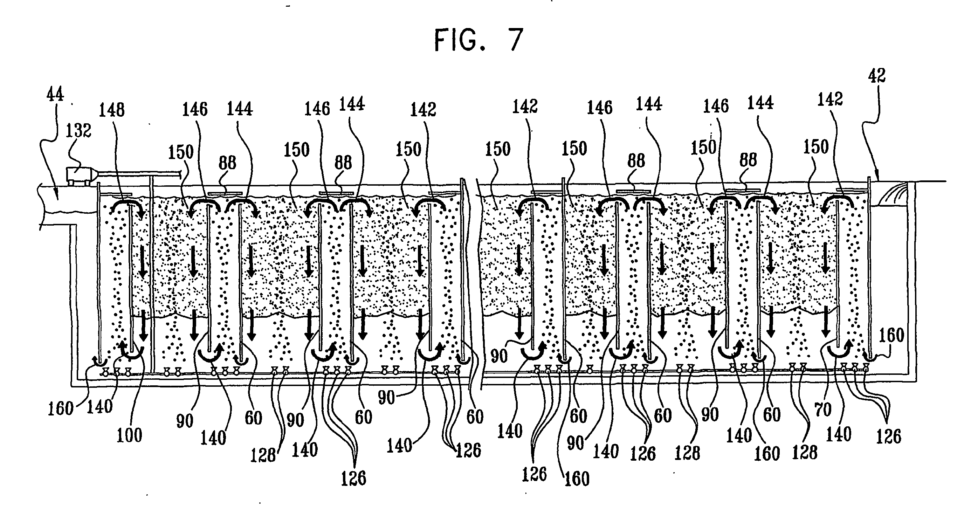

Reference is now made to Fig. 7, which is a sectional illustration corresponding to Fig. 6 and showing water flows and fluidization of particles thereby. It is seen in Fig. 7, that due to the water flows, typified in Figs. 4 and 5, the volume of the bed of particles 150 increases substantially, as the bed of particles is fluidized. The particles 150 are generally constrained to reside outside of the air lift assemblies, inasmuch as they generally do not pass underneath upstream partitions 60. When particles 150 become heavily coated with biomass, they do sometimes pass under downstream partitions 70 or 90 or upstream partition 100 and are sloughed of some of the biomass as they are propelled upwards by the action of the air lift.

It is noted that in addition to the water flows indicated by arrows 142, 144, 146 and 148, there exists a continuous flow of water from the upstream side of the basin 40 from the waste water inlet 42 to the treated water outlet 44. This flow is an undulating flow and includes passage under upstream partitions 60, 80 and 100, as indicated by arrows 160. The passage under upstream partitions 60, 80 and 100 is of relatively low volume and generally does not carry floating particles 150 into the air lifts, thereby constraining the particles 150 to reside outside of and between the air lift assemblies and preventing migration of particles across air lift assemblies.

It is appreciated that the provision of first and second pluralities of air diffusers 126 and 128 enables control of flow velocity between adjacent air lifts while providing a high level of aeration to the water in basin 40.

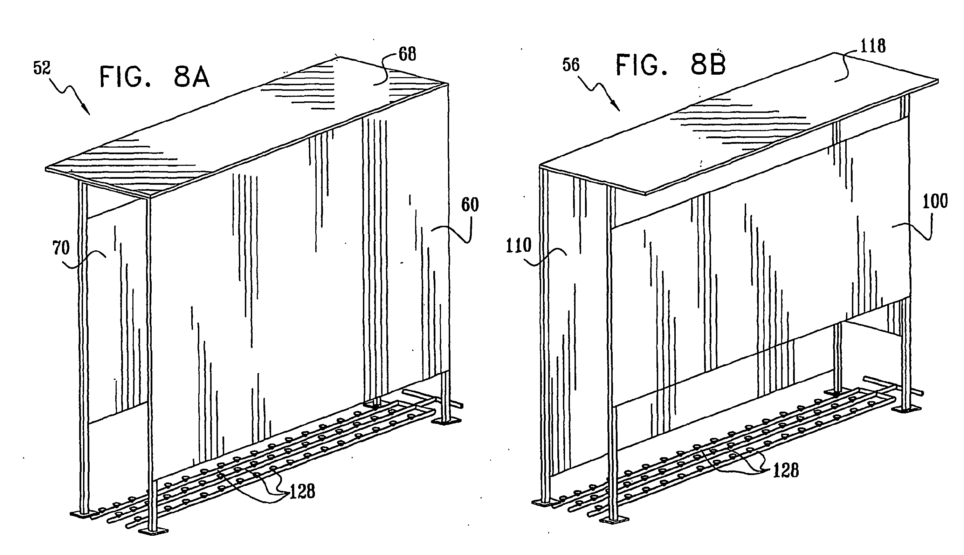

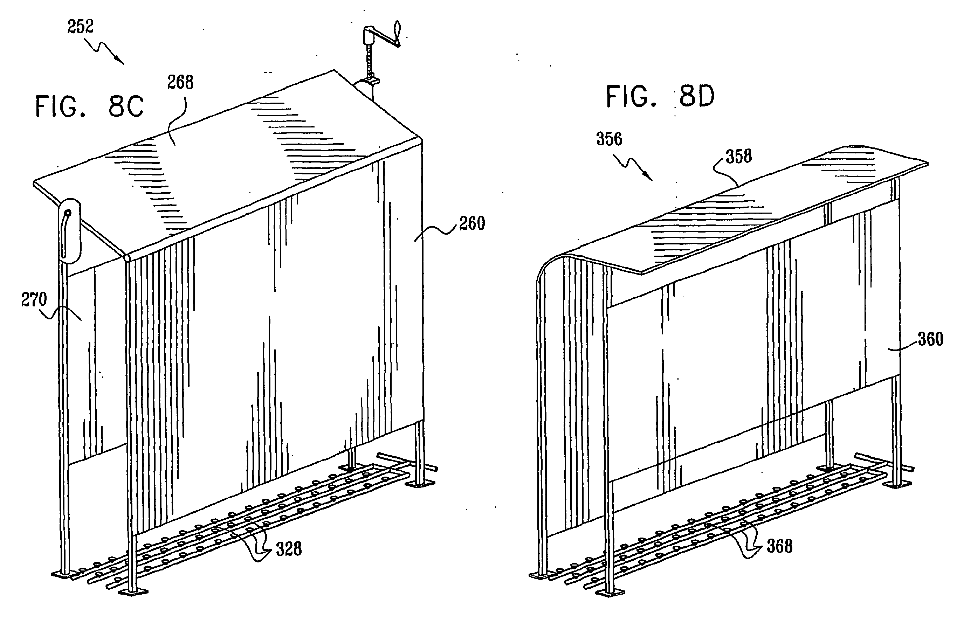

Reference is now made to Figs. 8A, 8B, 8C and 8D, which are simplified illustrations of four embodiments of a unidirectional rectangular airlift used in the embodiment of Figs. 2 - 7.

Fig. 8A illustrates a preferred initial air lift assembly 52, including upstream partition 60, deflector 68 and downstream partition 70 as well as first plurality of air diffusers 128.

Fig. 8B illustrates a preferred final air lift assembly 56 including upstream partition 100, downstream partition 110 and deflector 118, as well as first plurality of air diffusers 128.

Fig. 8C illustrate an alternative initial air lift assembly 252, including upstream partition 260, an adjustable angle deflector 268 and a downstream partition 270 as well as first plurality of air diffusers 328.

Fig. 8D illustrates an alternative final air lift assembly 356 including an integral curved downstream partition and deflector 358 and an upstream portion 360, as well as a first plurality of air diffusers 368. The curved design of the integral downstream partition and deflector reduces energy losses.

It is appreciated that the adjustable configuration of Fig. 8C may be employed additionally or alternatively for a final air lift assembly and the integral configuration of Fig. 8D may be employed additionally or alternatively for an initial air lift assembly.

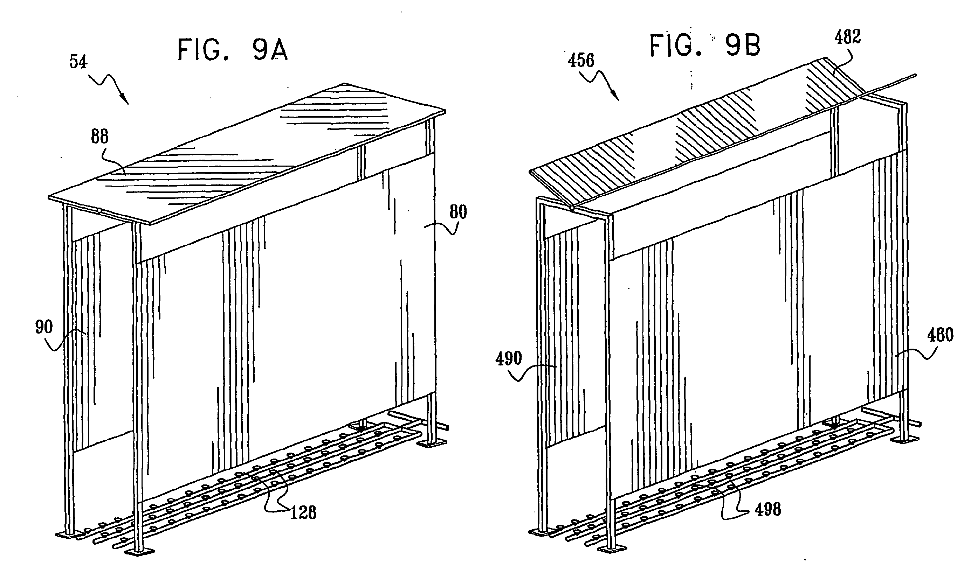

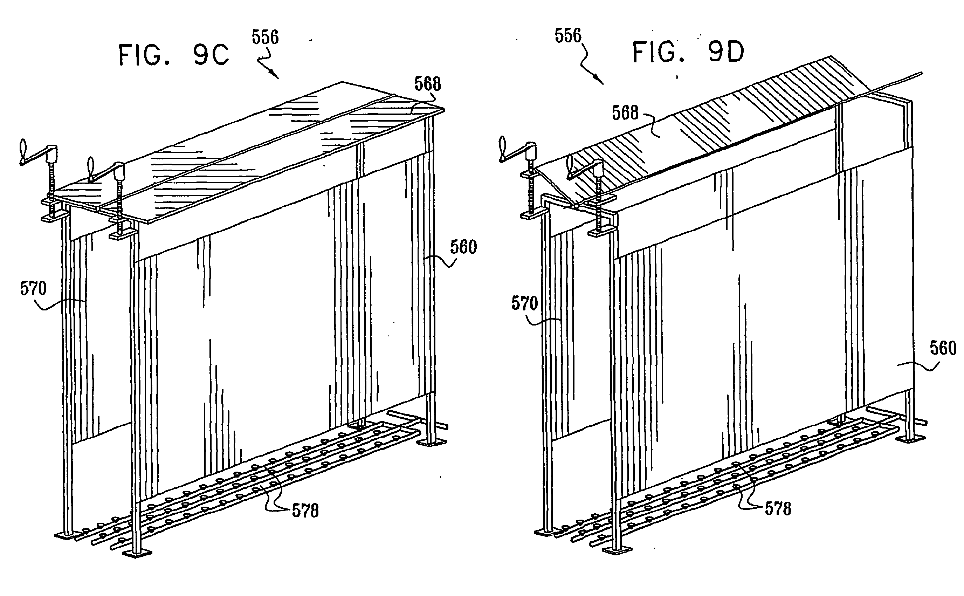

Reference is now made to Figs. 9A, 9B, 9C and 9D, which are simplified illustrations of four embodiments of a bidirectional rectangular airlift used in the embodiment of Figs. 2 - 7;

Fig. 9A illustrates a preferred intermediate air lift assembly 54, including upstream partition 80, deflector 88 and downstream partition 90 as well as first plurality of air diffusers 128.

Fig. 9B illustrates an alternative intermediate air lift assembly 456 including upstream partition 480, fixed angle deflector 482 and downstream portion 490, as well as a first plurality of air diffusers 498.

Fig. 9C illustrates a further alternative intermediate air lift assembly 556, including upstream partition 560, a two-way adjustable angle deflector 568 and a downstream partition 570 as well as first plurality of air diffusers 578. Fig. 9C shows the two-way adjustable angle deflector 568 in a flat orientation.

Fig. 9D illustrates the intermediate air lift assembly 556 of Fig. 9C in an alternative operative orientation wherein two-way adjustable angle deflector 568 is arranged to have an angled orientation, such as that shown in Fig. 9B.

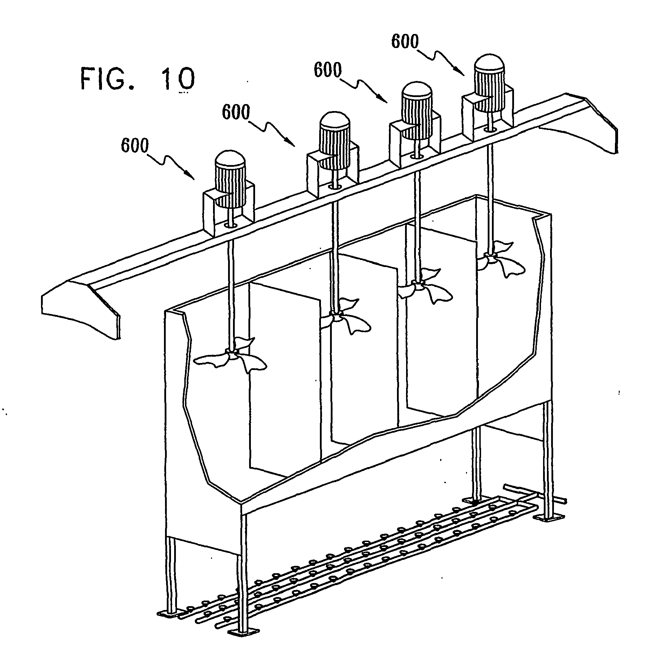

Reference is now made to Fig. 10, which is a simplified illustration of a denitrification unit useful in the embodiment of Figs. 2 - 7. De-nitrification units such as those shown in Fig. 10 may be installed instead of all of the intermediate air lifts 54 in a given process stage.

As seen in Fig. 10, a plurality of axial pumps 600 may provide lift without an air flow, as in the air lifts of Figs. 1 - 9, thereby to provide an anoxic denitrification process.

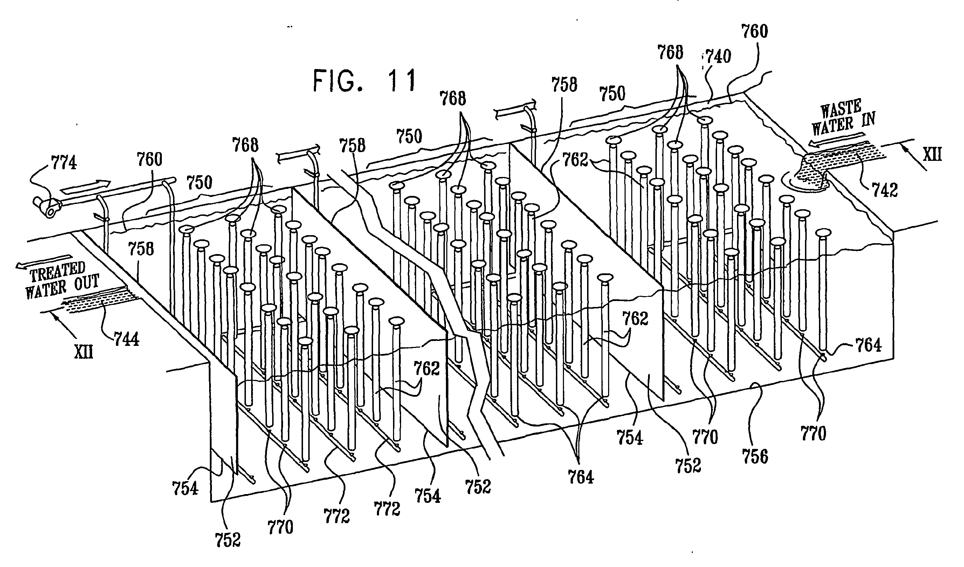

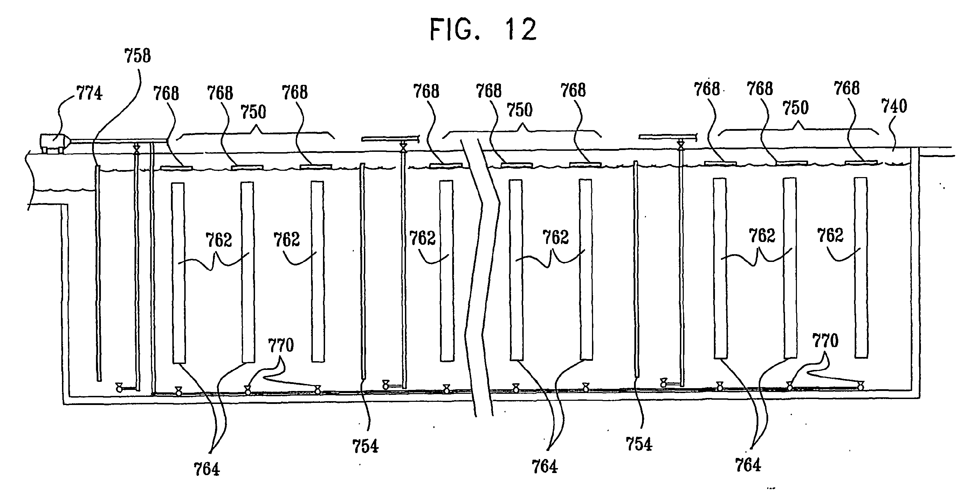

Reference is now made to Figs. 11 and 12, which are simplified illustrations of a embodiment of a waste water treatment system of the type of Fig. 1A or Fig. 1B in accordance with another embodiment of the present invention.

As shown in Figs. 11 and 12, it is a particular feature of the present invention that an array of air lifts are retrofitted into a conventional waste water treatment system including a basin 740 having a waste water inlet 742 and a treated water outlet 744.

In accordance with a preferred embodiment of the invention, an array of cylindrical air lifts 750 is arranged in multiple process stages, typically 4 - 12 in number, which are separated from each other typically by partitions 752, which extend from a bottom location 754 spaced from the bottom 756 of basin 740 by a first vertical separation and extend upwardly to a top location 758 above the water level 760 in basin 740. Partitions 752 preferably extend fully from side to side of the basin 740. Each cylindrical air lift 750 typically comprises a hollow shaft 762 which extends from a bottom location 764 spaced from bottom 756 by a second vertical separation which exceeds the first separation.

A deflector 768 is preferably disposed in spaced relationship over each hollow shaft 762 and is disposed at a location preferably at the water level 760.

It is noted that in the embodiment of Figs. 11 and 12 an air diffuser 770 is preferably disposed underlying each hollow shaft 762 to provide an air lift therethrough. All of the air diffusers 770 are coupled by air conduits 772 to one or more air blowers 774.

Immediately upstream of each partition 752 there is provided a series of air diffusers 776, which are preferably coupled by air conduits 778 to one or more air blowers 774.

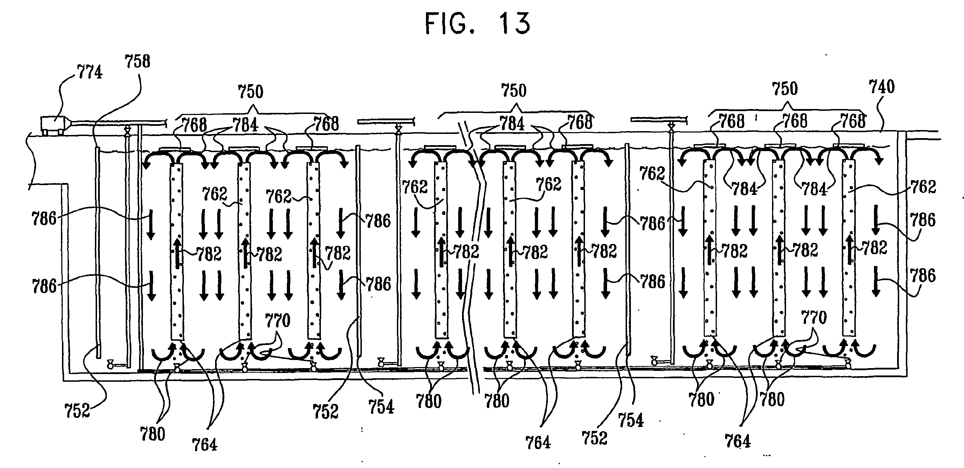

Reference is now made to Fig. 13, which is a simplified illustration of the embodiment of Figs. 11 and 12 showing water flows. As seen in Fig. 13, the air diffusers 770 underlying the hollow shafts 762 cause water to flow into the hollow shafts 762, as indicated by arrows 780 and upwardly through the hollow shafts, as indicated by arrows 782. The presence of deflectors 768 overlying each hollow shaft 762 causes the water exiting the tops of hollow shafts 762 to move sideways and downwardly, as indicated by arrows 784. The absence or lower density of air diffusers outside of shafts 762 allows water to flow downwardly, as indicated by arrows 786.

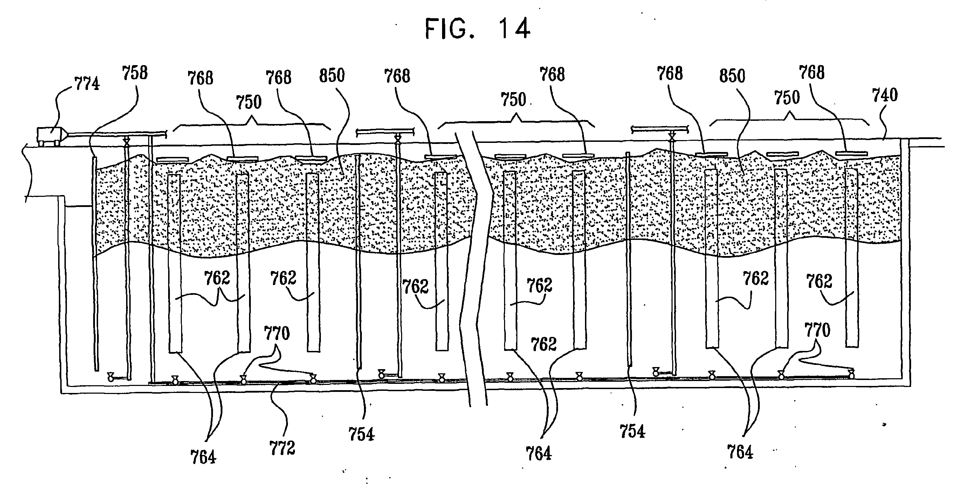

Reference is now made to Fig. 14, which is a sectional illustration corresponding to Fig. 12 and showing particles 850 preferably located in the embodiment of Fig. 11 in the absence of fluid flow. Particles 850 are preferably floating porous plastic particles having a density lower than that of pure water, preferably having a specific gravity between 0.65 and 0.95. Typically, the particles have an irregular shape, whose largest dimension is approximately 4-10 mm and preferably about 6 mm. Preferably the particles have a total porosity exceeding 50% and a preferred mean pore diameter of pores, whose diameter exceeds 10 microns, of about 20 microns.

As seen in Fig. 14, preferably 10 - 40 percent of the volume of the basin is filled with particles 850 in the absence of water flow.

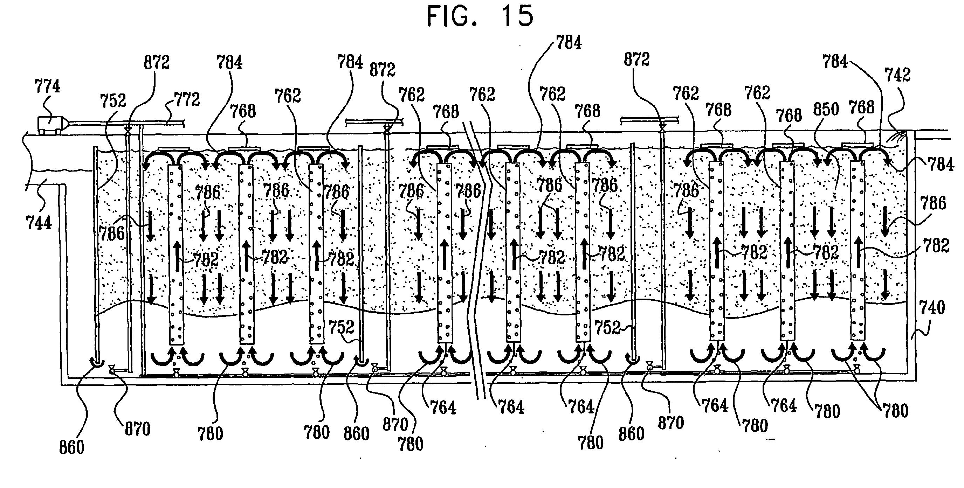

Reference is now made to Fig. 15, which is a sectional illustration corresponding to Fig. 14 and showing water flows and fluidization of particles thereby. It is seen in Fig. 15, that due to the water flows, typified in Fig. 13, the volume of the bed of particles 850 increases substantially, as the bed of particles is fluidized. The particles 850 are generally constrained to reside outside of the hollow shafts 762, inasmuch as they generally do not reside as low in the basin 740 as the openings of shafts 762 at bottom locations 764 thereof.

When particles 850 become heavily coated with biomass, they do sometimes enter hollow shafts 762 and are sloughed of some of the biomass as they are propelled upwards by the action of the air lift provided thereby.

It is noted that in addition to the water flows indicated by arrows 780, 782, 784 and 786, there exists a continuous flow of water from the upstream side of the basin 740 from the waste water inlet 742 to the treated water outlet 744. This flow is a partially undulating flow and includes passage under partitions 752, as indicated by arrows 860. The passage under partitions 752 is of relatively low volume and generally does not carry floating particles 850 into the air lifts, thereby constraining the particles 850 to reside outside of and between the air lifts and preventing migration of particles across partitions 752. ,

It is appreciated that control of particle movement and prevention of particle migration may be assisted by ancillary air diffusers 870, disposed upstream of partitions 752. These air diffusers are connected via valves 872 and air conduits 772 to one or more air blowers 774.

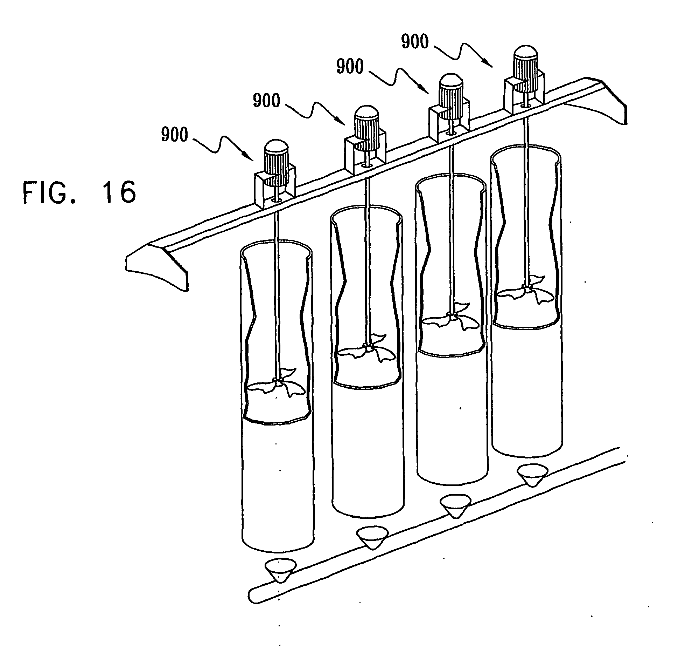

Reference is now made to Fig. 16, which is a simplified illustration of a denitrification unit useful in the embodiment of Figs. 11 - 15. De-nitrification units such as those shown in Fig. 16 may be installed instead of all of the air lifts 750 in a given process stage.

As seen in Fig. 16, a plurality of axial pumps 900 may provide lift without an air flow, as in the air lifts of Figs. 11 - 15, thereby to provide an anoxic denitrification process.

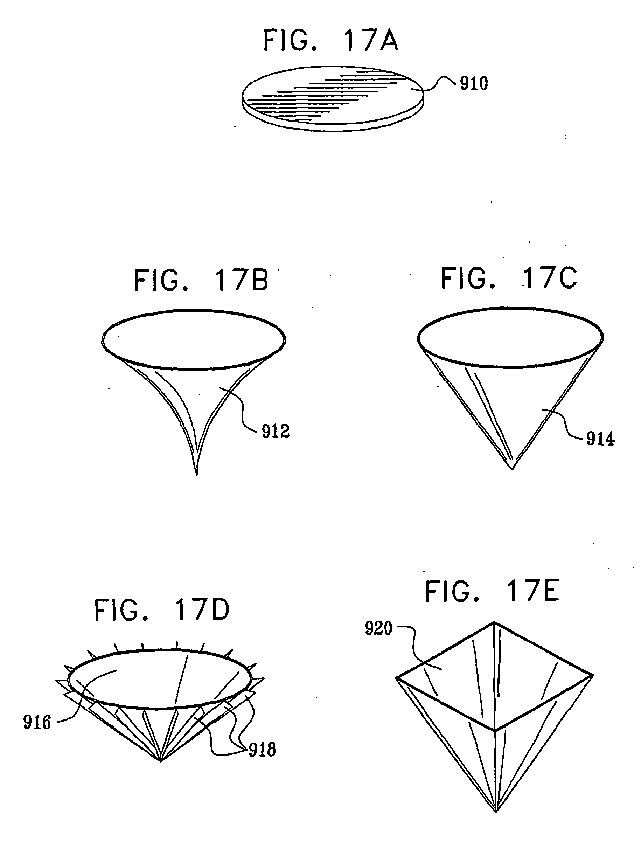

Reference is now made to Figs. 17A, 17B, 17C, 17D and 17E, which are simplified illustrations of examples of various embodiments of deflectors 768, useful in the embodiment of Figs. 11 - 15.

Fig. 17A shows a flat deflector 910, while Fig. 17B shows a curved deflector 912. Fig. 17 shows a conical deflector 914, while Fig. 17D shows a finned conical deflector 916, having fins 918. Fig. 17E shows a pyramidal deflector 920.

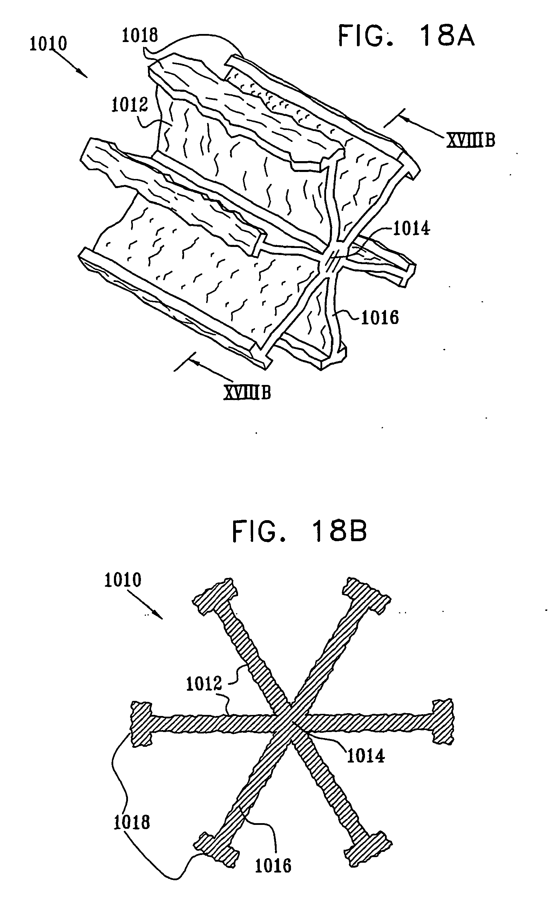

Reference is now made to Figs. 18A and 18B, which are respective simplified pictorial and sectional illustrations of a .biofilm support constructed and operative in accordance with a preferred embodiment of the present invention. As seen in Figs. 18A and 18B, biofilm support element 1010 is formed of plastic, having a maximum dimension which does not exceed 50 mm and having a specific gravity of between approximately 0.70 - 0.91.

Preferably, biofilm support element 1010 has a generally cylindrical configuration and includes a plurality of radially extending surfaces 1012 extending outwardly from a generally solid center 1014. Preferably, surfaces 1012 are integrally formed as one piece with the solid center 1014, preferably by extrusion, and define opposite side surfaces of a plurality of radially extending ribs 1016, preferably between five and nine in number. Each of ribs 1016 may have a thickness of between 0.5 and 2 mm.

Preferably, a transverse strip 1018 is provided along an outwardly facing edge of each rib 1016. Additional transverse strips may also be provided along each rib. In Figs. 18A and 18B, the width of each strip is preferably equal to approximately 15 - 60 percent, and more preferably equal to approximately 20 - 40 percent, of the overall circumference of the cylindrical biofilm support element 1010, divided by the number of ribs 1016.

It is a particular feature that the biofilm support element 1010 and specifically ribs 1016 and strips 1018 are configured so as to prevent retained interdigitation between ribs of two separate biofilm support elements. In

Figs. 18A and 18B, interdigitation can occur, but upon such interdigitation, two separate biofilm support elements readily disengage. Accordingly, the biofilm support element 1010 of Figs. 18A and 18B is preferably configured so as to prevent mechanically retained joining of two separate biofilm support elements 1010.

Preferably, biofilm support element 1010 is formed of a plastic material selected from the following plastic materials: polyolefin, polystyrene, polyvinyl chloride and polyurethane. Polypropylene having a melt flow index typically in the range of 0.5 - 10 is the preferred material.

Preferably, biofilm support element 1010 has a specific gravity of between approximately 0.75 - 0.89 and most preferably between approximately 0.81 - 0.87.

It is a particular feature that the surfaces 1012 of ribs 1016, as well as all other exposed surfaces of biofilm support element 1010, are roughened. Preferably, some or all of the roughened biofilm adherence surfaces have a roughness average (Ra) in the range of 100 - 800 microns and most preferably in the range of 200 - 500 microns.

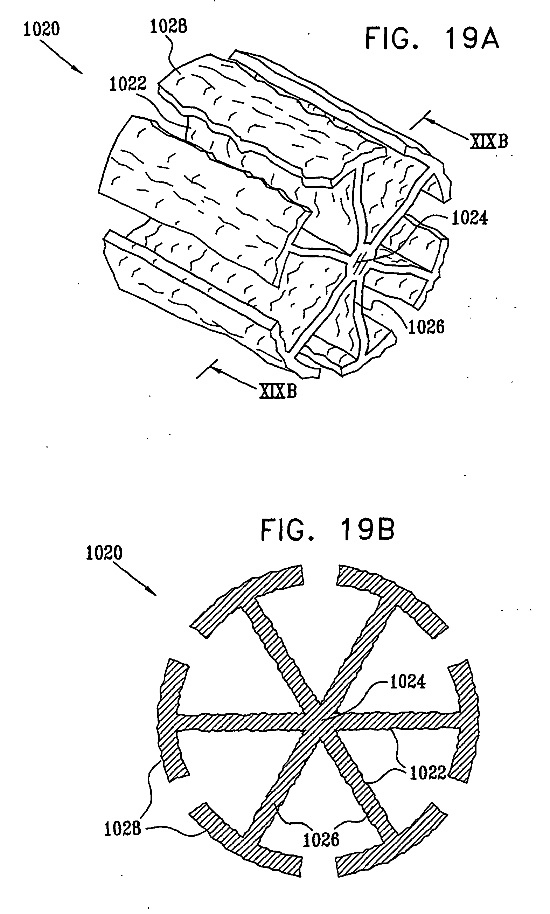

Reference is now made to Figs. 19A and 19B, which are respective simplified pictorial and sectional illustrations of a biofilm support constructed and operative in accordance with a preferred embodiment of the present invention. As seen in Figs. 19A and 19B, there is provided a biofilm support element 1020, similar to that of Figs. 18A and 18B, formed of plastic, having a maximum dimension which does not exceed 50 mm and having a specific gravity of between approximately 0.70 - 0.91.

Preferably, and similarly to biofilm support element 1010 (Figs. 18A and 18B), biofilm support element 1020 has a generally cylindrical configuration and includes a plurality of radially, extending surfaces 1022 expending outwardly from a generally solid center 1024.

Preferably, surfaces 1022 are integrally formed as one piece with the solid center 1024, preferably by extrusion, and define opposite side surfaces of a plurality of radially extending ribs 1026, preferably between five and nine in number. In accordance with a preferred embodiment of the present invention, each of ribs 1026 has a thickness of between 0.5 and 2 mm.

Preferably, a transverse strip 1028 is provided along an outwardly facing edge of each rib 1026. Additional transverse strips may also be provided along each rib. In Figs. 19A and 19B, the width of each strip is preferably equal to approximately 60 - 90 percent of the overall circumference of the cylindrical biofilm support element 1020, divided by the number of ribs 1026.

It is a particular feature that the biofilm support element 1020 and specifically ribs 1026 and strips 1028 are configured so as to prevent interdigitation between ribs of two separate biofilm support elements. In

Figs. 19A and 19B, interdigitation cannot occur. Accordingly, the biofilm support element 1020 of Figs. 19A and 19B is preferably configured so as to prevent mechanically retained joining of two separate biofilm support elements 1020.

Similarly to biofilm support element 1010 (Figs 18A and 18B), biofilm support element is preferably formed of a plastic material selected from the following plastic materials: polyolefin, polystyrene, polyvinyl chloride and polyurethane. Polypropylene having a melt flow index typically in the range of 0.5 - 10 is the preferred material.

Preferably, biofilm support element 1020 has a specific gravity of between approximately 0.75 - 0.89 and most preferably between approximately 0.81 - 0.87.

It is a particular feature that the surfaces 1022 of ribs 1026, as well as other exposed surfaces of biofilm support element 1020, are roughened. Preferably, some or all of the roughened biofilm adherence surfaces have a roughness average (Ra) in the range of 100 - 800 microns and most preferably in the range of 200 - 500 microns.

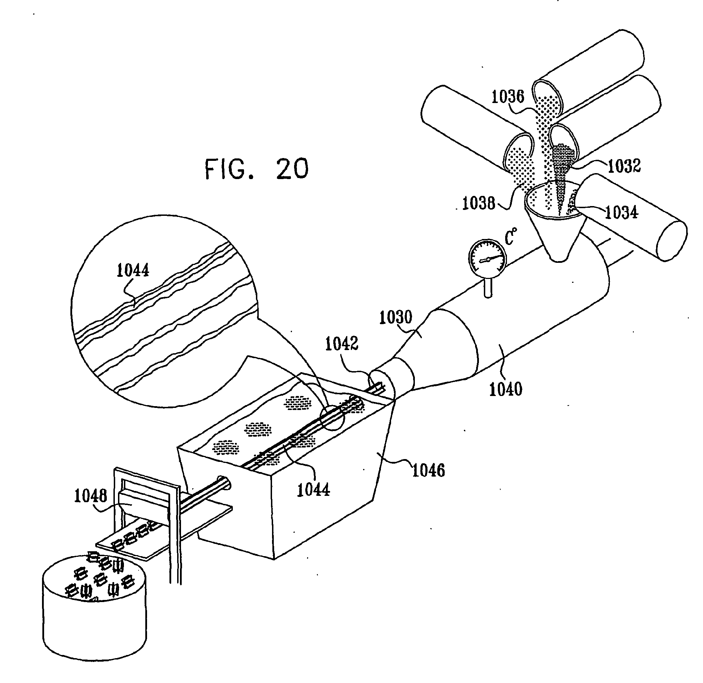

Reference is now made to Fig. 20, which is a simplified illustration of a methodology (not forming part of the present invention) for forming a biofilm support which may be used in the present invention.

As seen in Fig. 20 an extruder 1030, which may be a conventional extruder, receives a mixture of materials, preferably including a plastic material 1032 selected from the following plastic materials: polyolefin, polystyrene, polyvinyl chloride and polyurethane. Polypropylene having a melt flow index typically in the range of 0.5 - 10 is the preferred material.

Preferably, one or more foaming agents, and preferably the following foaming agents, are supplied to the extruder together with the plastic material:
an exothermic foaming agent 1034, preferably azodicarbon amide; and
an endothermic foaming agent 1036, preferably sodium bicarbonate or a derivative thereof.

Additionally,
a filler 1038, preferably limestone or talc, is also added.

Preferred proportions of the foregoing constituents by weight, for each one unit of plastic by weight, are as follows:
exothermic foaming agent 1034 -- 0 - 2%
endothermic foaming agent 1036 -- 0 - 3%
filler 1038 -- 0 - 10%

Most preferred proportions of the foregoing constituents by weight, for each one unit of polypropylene by weight, are as follows:
exothermic foaming agent 1034 -- 0.3 - 1.5%
endothermic foaming agent 1036 -- 1 - 2.5%
filler 1038 -- 0 - 5%

The foregoing constituents are preferably premixed together prior to being supplied to the extruder 1030 and are preferably supplied in a granulated form.

The extruder 1030 is preferably operated so as to have a bell shaped temperature profile along a longitudinal axis 1040, such that the highest temperature in the extruder 1030 is at a location intermediate the flowpath of material therethrough.

The extruder 1030 is preferably formed with a nozzle 1042, across which there is provided a pressure drop of at least 1500 psi.

A roughened extruded elongate profile 1044 exits nozzle 1042 into a cooling bath 1046. The profile 1044 is drawn by a puller (not shown) and is cut into appropriate lengths by a cutter 1048.

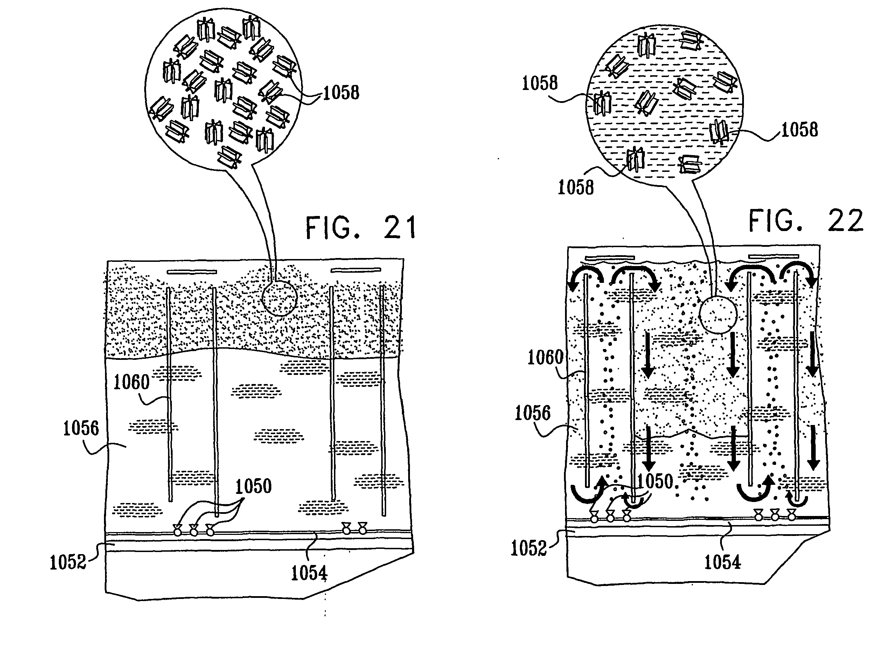

Reference is now made to Figs. 21 and 22, which are simplified illustrations of a waste water treatment system and methodology in accordance with a preferred embodiment of the present invention, employing a biofilm support. As seen in Figs. 21 and 22, biofilm support element 1010 (Figs. 18A and 18B) or biofilm support element 1020 (Figs. 19A and 19B) may be advantageously employed in an air-lift type waste water treatment system and methodology. A preferred such system is described in applicants' co-pending U.S. Patent Application 09/866,886, filed May 29, 2001, entitled "METHOD . AND APPARATUS FOR BIOLOGICAL . WASTEWATER TREATMENT".

As seen in Fig. 21, an air-lift waste water treatment system and methodology employs a pressurized air supply, typically including nozzles 1050, located near the floor of a basin 1052, which are supplied with pressurized air from a compressor (not shown) via pipes 1054. Waste water 1056 fills part of basin 1052, and a multiplicity of biofilm supports 1058, such as biofilm support element 1010 (Figs. 18A and 18B) or 1020 (Figs. 19A and 19B) described hereinabove, float at the top of the waste water 1056, as shown. Preferably, generally cylindrical upstanding air lift enclosures 1060 are provided overlying nozzles 1050.

As seen in Figs. 21 and 22, the air-lift waste water treatment system and methodology employs pressurized air from nozzles 1050 to cause an upward flow of waste water 1056 through air lift enclosures 1060. This causes biofilm supports 1058 to be inversely fluidized in waste water 1056, thereby providing enhanced turbulence and mass transfer for efficient waste water treatment.

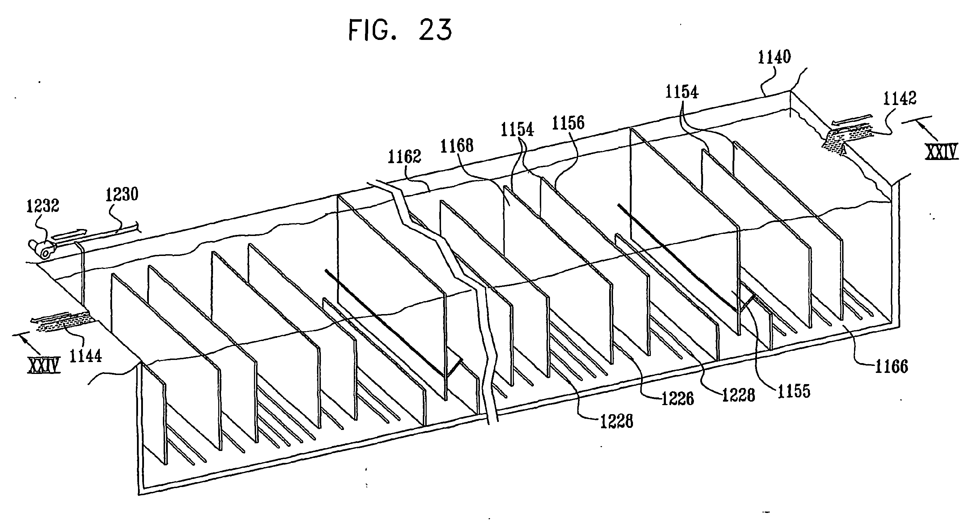

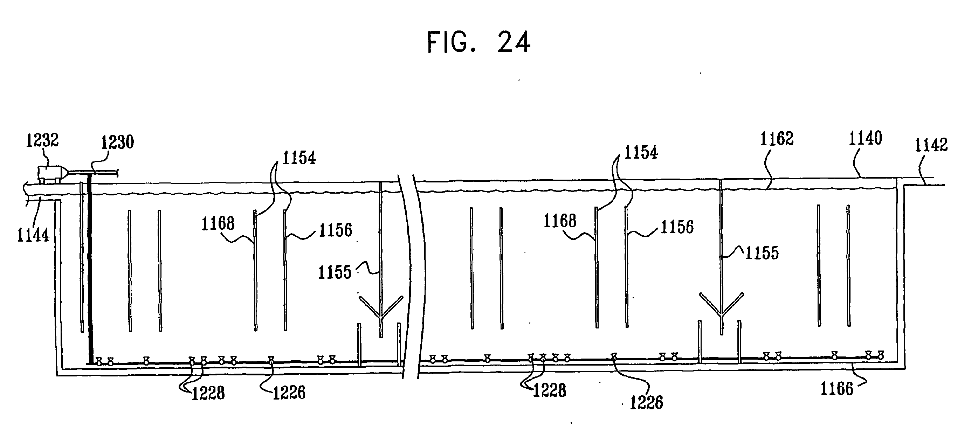

Reference is now made to Figs. 23 and 24, which are simplified illustrations of a waste water treatment system of the type of Fig. 1A or Fig. 1B in accordance with another preferred embodiment of the present invention, which may or may not be a retrofit. As shown in Figs. 23 and 24, it is a particular feature of the present invention that a series of air lifts are fitted into a conventional waste water treatment system including a basin 1140 having a waste water inlet 1142 and a treated water outlet 1144.

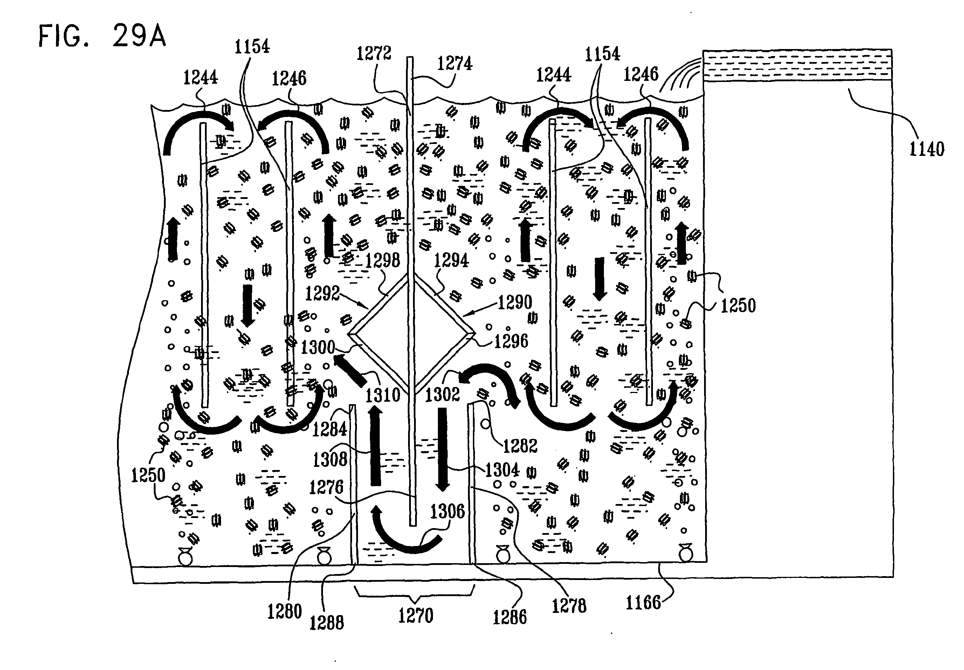

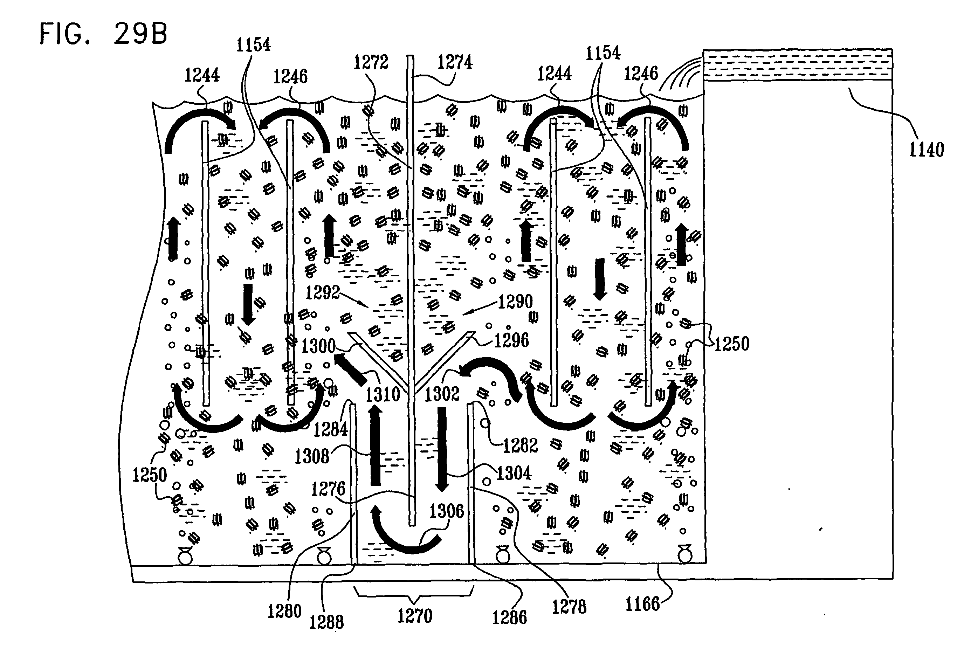

In accordance with a preferred embodiment of the invention, a series of air lift assemblies 1154 is arranged in multiple process stages, typically 4 - 12 in number. Each process stage includes at least one air lift assembly 1154. The process stages are separated by stage partition assemblies 1155, preferred embodiments of which are described hereinbelow with reference to Figs. 29A and 29B.

Each air lift assembly 1154 preferably includes an upstream partition 1156 which preferably extends downwardly from a top location below the water level 1162 in basin 1140 to a bottom location spaced from the bottom 1166 of basin 1140 and preferably extends fully from side to side of the basin 1140. The air lift assembly 1154 preferably also includes a downstream partition 1168, which preferably also extends fully from side to side of the basin 1140 and extends below the water level 1162 and as close to the bottom 1166 as does partition 1154. The top of downstream partition 1168 is preferably at the same level as is the top of upstream partition 1154. Alternatively, some or all of partitions 1156 and 1168 need not extend fully from side to side of the basin 1140.

It is noted that in the embodiment of Figs. 23 and 24 a first plurality of air diffusers 1226 are disposed at the bottom of basin 1140 intermediate the upstream and downstream partitions 1156 and 1168 of each air lift assembly and a second plurality of air diffusers 1228, typically greater in number than the first plurality of air diffusers are disposed at the bottom of basin 1140 intermediate pairs of adjacent air lift - assemblies 1154 and intermediate air lift assemblies 1154 and stage partition assemblies 1155. All of the air diffusers 1226 and 1228 are coupled by air conduits 1230 to one or more air blowers 1232.

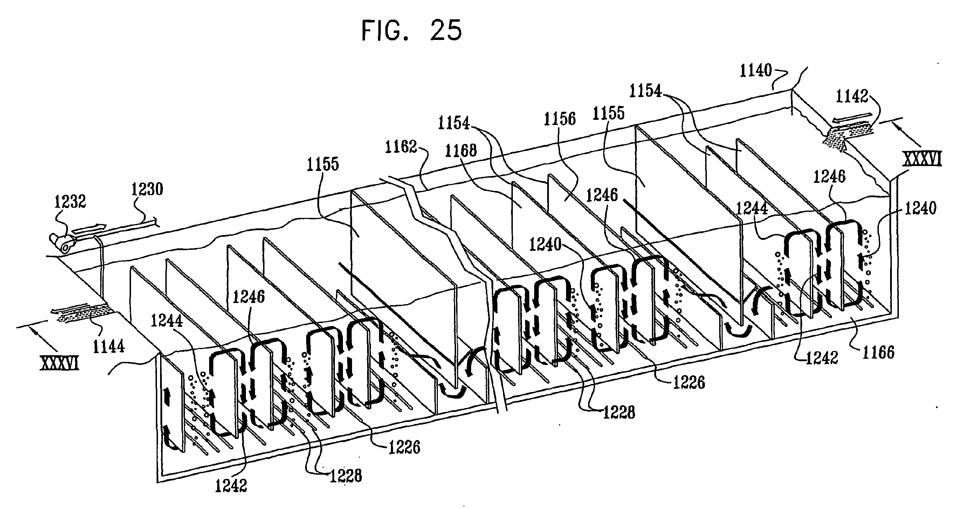

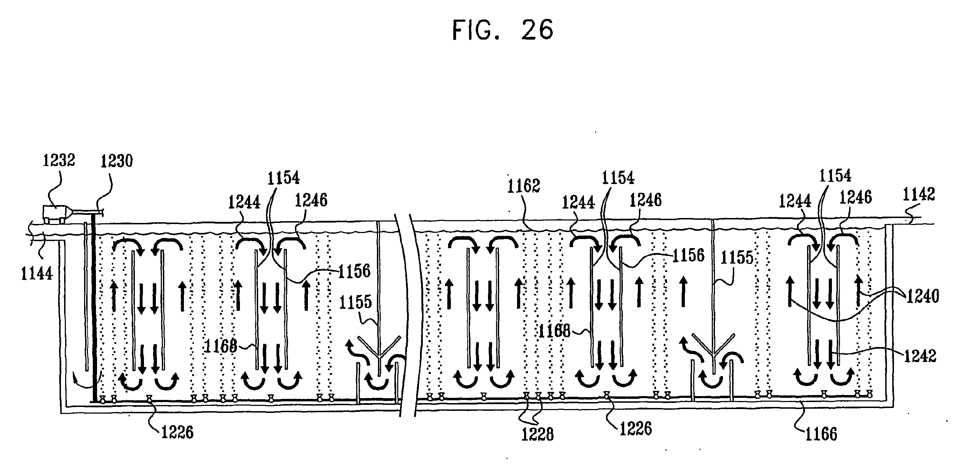

Reference is now made to Figs. 25 and 26, which are simplified illustrations of the embodiment of Figs. 23 and 24 showing water flows. As seen in Figs. 25 and 26, the relatively high density of air diffusers intermediate pairs of adjacent air lift assemblies 1154 and intermediate air lift assemblies 1154 and stage partition assemblies 1155 causes water to flow upward between intermediate pairs of adjacent air lift assemblies 1154 and intermediate air lift assemblies 1154 and stage partition assemblies 1155, as indicated by arrows 1240. The relatively lower density of air diffusers intermediate the upstream and downstream partitions of each air lift assembly allows water to flow downward as indicated by arrows 1242.

Due to the construction of the airlift assemblies 1154, water flows in both upstream and downstream directions, indicated by respective arrows 1244 and 1246, at the top of each airlift assembly 1154.

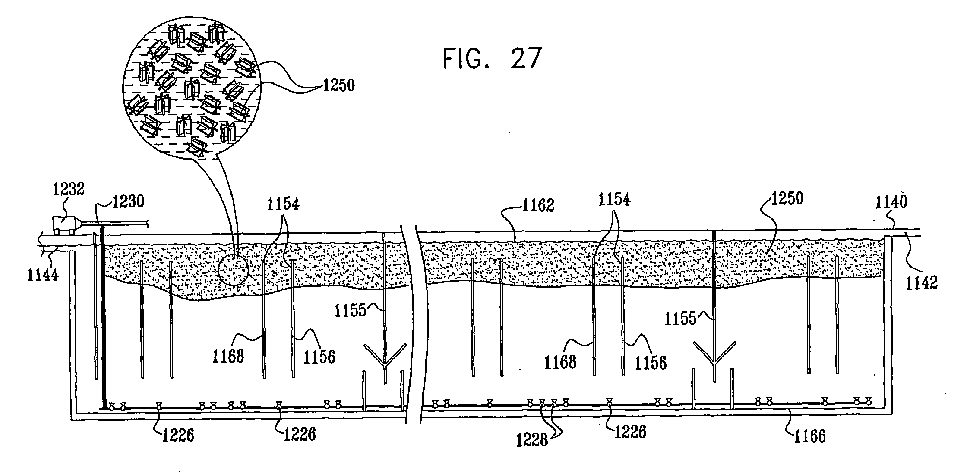

Reference is now made to Fig. 27, which is a sectional illustration corresponding to Fig. 24 and showing particles 1250 preferably located in the embodiment of Fig. 23 in the absence of fluid flow. Particles 1250 are preferably floating biomass support elements having a density lower than that of pure water, preferably having a specific gravity between 0.7 and 0.91. Typically, the biomass support elements have a generally cylindrical configuration and include a plurality of radially extending surfaces. Preferred particles 1250 are described hereinabove with reference to Figs. 18A - 19B.

As seen in Fig. 27, preferably 10 - 40 percent of the volume of the basin is filled with particles 1250 in the absence of water flow.

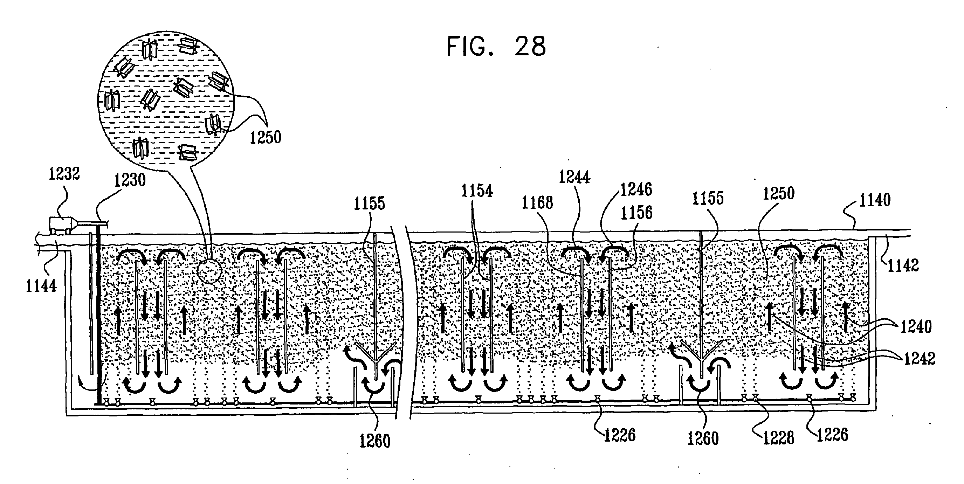

Reference is now made to Fig. 28, which is a sectional illustration corresponding to Fig. 27 and showing water flows and fluidization of particles thereby. It is seen in Fig. 28, that due to the water flows, typified in Figs. 25 and 26, the volume of the bed of particles 1250 increases substantially, as the bed of particles is fluidized.

It is noted that in addition to the water flows indicated by arrows 1240, 1242, 1244 and 1246, there exists a continuous flow of water from the upstream side of the basin 1140 from the waste water inlet 1142 to the treated water outlet 1144. This flow is an undulating flow and includes passage under stage partition assemblies 1155, as indicated by arrows 1260. The passage under stage partition assemblies 1155 is of relatively low volume and generally does not carry floating particles 1250 across the stage partition assemblies 1155, thereby constraining the particles 1250 of each stage to reside within that stage and preventing migration of particles across stage partition assemblies 1155.

It is appreciated that the provision of first and second pluralities of air diffusers 1226 and 1228 enables control of flow velocity between adjacent air lifts while providing a high level of aeration to the water in basin 1140. The first plurality of air diffusers 1226 is of principal importance during start up of operation of the system.

Reference is now made to Figs. 29A and 29B, which are simplified illustrations of two embodiments of a stage partition assembly including a carrier barrier employed in the embodiment of Figs. 23 - 28.

Turning to Fig. 29A, there is seen a stage partition assembly 1270 comprising an upstanding generally vertical partition 1272, a top edge 1274 of which extends above the level of water in basin 1140 and a bottom edge 1276 of which is separated from the bottom 1166 of basin 1140. Disposed adjacent partition 1272 in spaced relationship therewith on both sides thereof are respective upstream and downstream generally vertical partitions 1278 and 1280, having respective top edges 1282 and 1284 which lie below the level of water in basin 1140 and preferably at a level which is less than half of the height of the water in basin 1140 and respective bottom edges 1286 and 1288 which are preferably sealed to the bottom 1166 of basin 1140. Preferably the height of each of partitions 1278 and 1280 is approximately one meter and more generally between approximately 0.5 and 1.5 meters.

Disposed on respective upstream and downstream sides of partition 1272 above and spaced from top edges 1282 and 1284 of respective partitions 1278 and 1280 are inclined flow director assemblies 1290 and 1292, comprising respective pairs of panels 1294 and 1296 and 1298 and 1300. Panels 1294 and 1296 preferably are each inclined with respect to partition 1272 and are mutually angled by 90 - 120 degrees. Similarly, panels 1298 and 1300 preferably are each inclined with respect to partition 1272 and are mutually angled by 90 - 120 degrees.

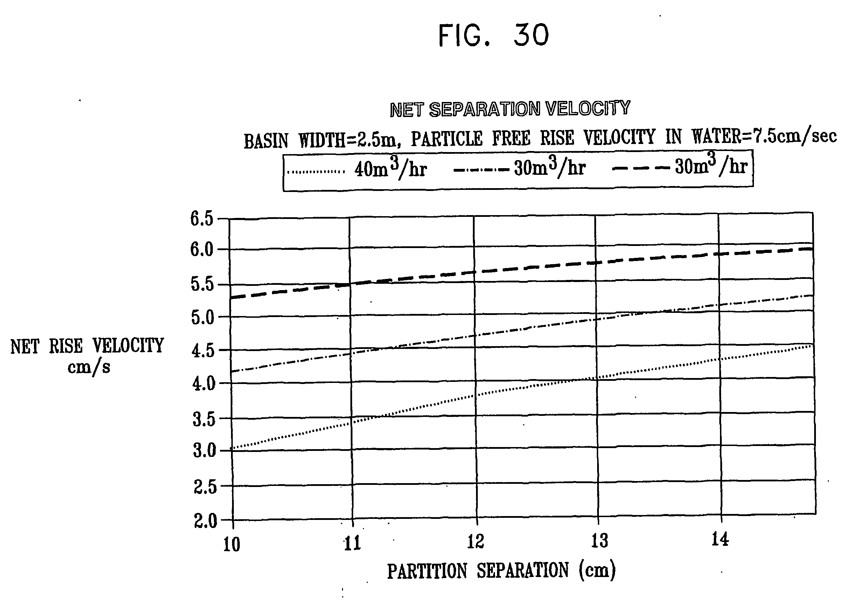

In accordance with a preferred embodiment of the present invention, partition 1272 is spaced from each of partitions 1278 and 1280 by a distance which is selected such that the water flow velocity therethrough is significantly lower than the free rise velocity of the biomass support elements 1250, in water. Preferably, the flow velocity of water between partition 1272 and partitions 1278 and 1280 is less than one-half of the free rise velocity of the biomass support elements 1250. Determination of the separation distance of the partitions 1278 and 1280 for a given flow velocity made be readily made from the graph presented in Fig. 30, for different water flow rates.

The stage partition assembly 1270 preferably is operable to allow water flow therethrough, as indicated by arrows 1302, 1304, 1306, 1308 and 1310, while generally preventing the passage therethrough of biomass support elements 1250.

Fig. 29B illustrates an alternative embodiment of a stage partition assembly 1320 which is similar to assembly 1270 other than in that panels 1294 and 1298 are eliminated. The operation of assembly 1320 is substantially similar to that of assembly 1270.

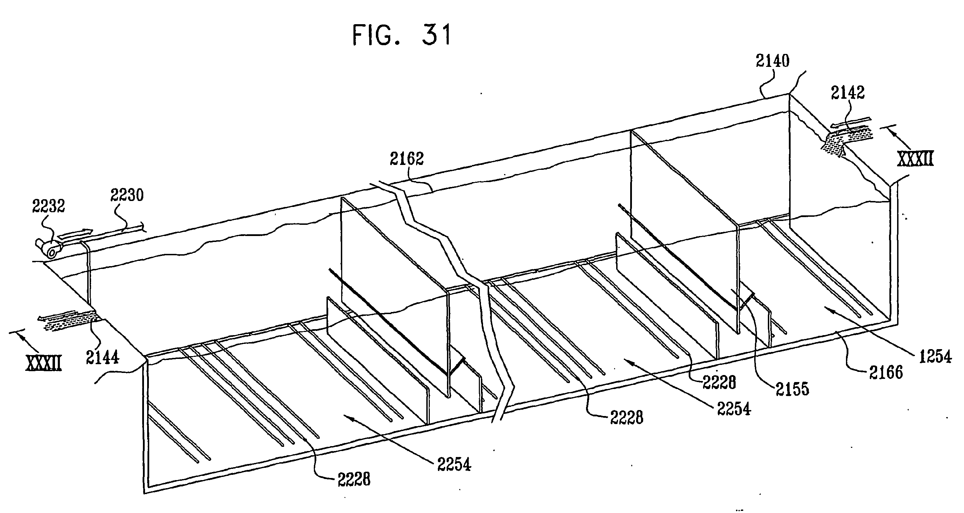

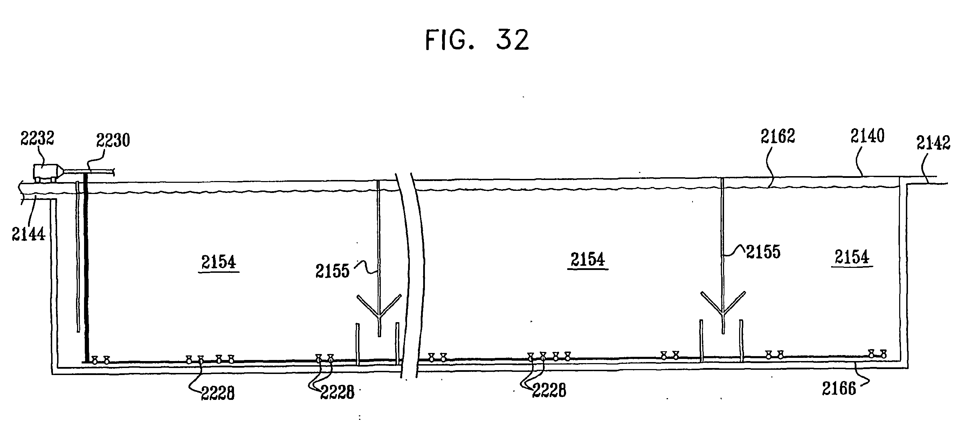

Reference is now made to Figs. 31 and 32, which are simplified illustrations of a waste water treatment system of the type of Fig. 1A or Fig. 1B in accordance with a further preferred embodiment of the present invention, which may or may not be a retrofit. The embodiment of Figs. 31 - 32 is distinguished from that of Figs. 23 and 24 in that upstream and downstream partitions are eliminated. As shown in Figs. 31 and 32, it is a particular feature of the present invention that a series of air lifts are fitted into a conventional waste water treatment system including a basin 2140 having a waste water inlet 2142 and a treated water outlet 2144.

In accordance with a preferred embodiment of the invention, a series of air lift assemblies 2154 is arranged in multiple process stages, typically 4 - 12 in number. Each process stage includes at least one air lift assembly 2154. The process stages are separated by stage partition assemblies 2155, preferred embodiments of which are described hereinbelow with reference to Figs. 31 and 32.

It is noted that in the embodiment of Figs. 31 and 32 a plurality of air diffusers 2228 are disposed at the bottom of basin 2140 intermediate pairs of adjacent air lift assemblies 2154 and intermediate air lift assemblies 2154 and stage partition assemblies 2155. All of the air diffusers are coupled by air conduits 2230 to one or more air blowers 2232.

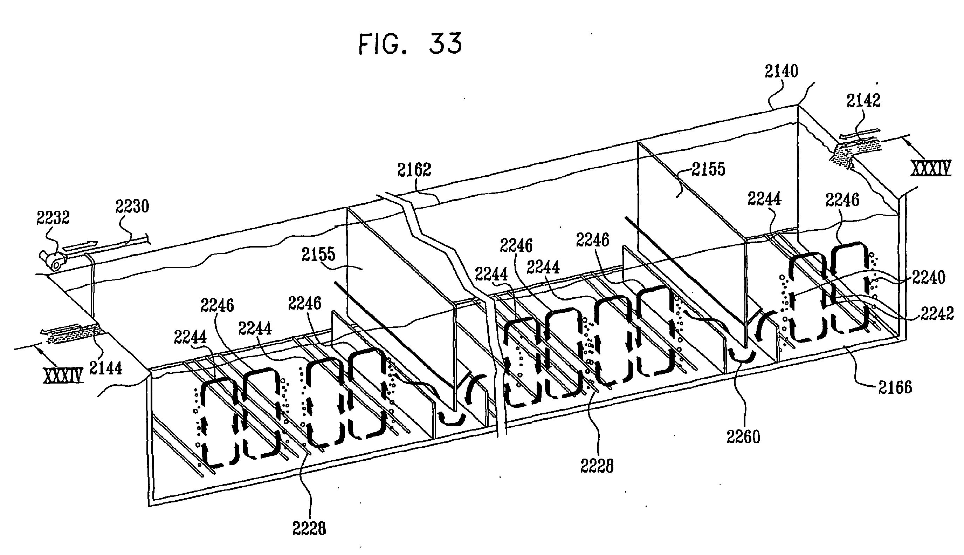

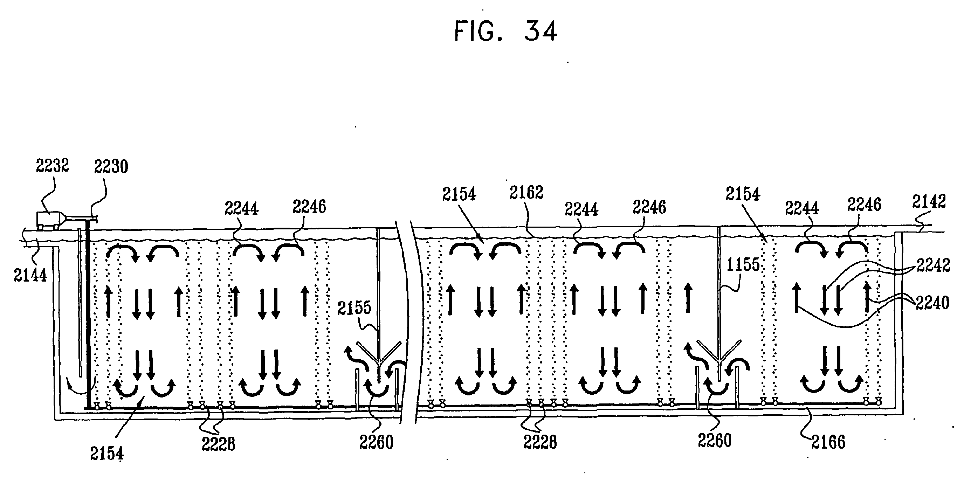

Reference is now made to Figs. 33 and 34, which are simplified illustrations of the embodiment of Figs. 31 and 32 showing water flows. As seen in Figs. 33 and 34, the relatively high density of air diffusers 2228 intermediate pairs of adjacent air lift assemblies 2154 and intermediate air lift assemblies 2154 and stage partition assemblies 2155 causes water to flow upward between intermediate pairs of adjacent air lift assemblies 2154 and intermediate air lift assemblies 2154 and stage partition assemblies 2155, as indicated by arrows 2240. The relatively lower density of air diffusers intermediate the upstream and downstream partitions of each air lift assembly allows water to flow downward as indicated by arrows 2242.

Due to the locations of the airlift assemblies 2154, water flows in both upstream and downstream directions, indicated by respective arrows 2244 and 2246, at the top of each airlift assembly 2154.

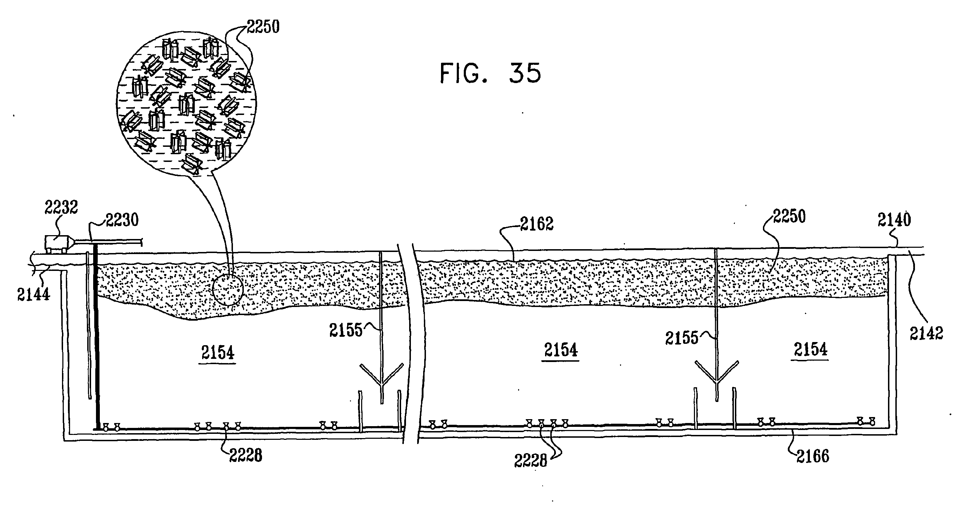

Reference is now made to Fig. 35, which is a sectional illustration corresponding to Fig. 32 and showing particles 2250 preferably located in the embodiment of Fig. 31 in the absence of fluid flow. Particles 2250 are preferably floating biomass support elements having a density lower than that of pure water, preferably having a specific gravity between 0.7 and 0.91. Typically, the biomass support elements have a generally cylindrical configuration and include a plurality of radially extending surfaces. Preferred particles 2250 are described hereinabove with reference to Figs. 18A - 19B.

As seen in Fig. 35, preferably 10 - 40 percent of the volume of the basin is filled with particles 2250 in the absence of water flow.

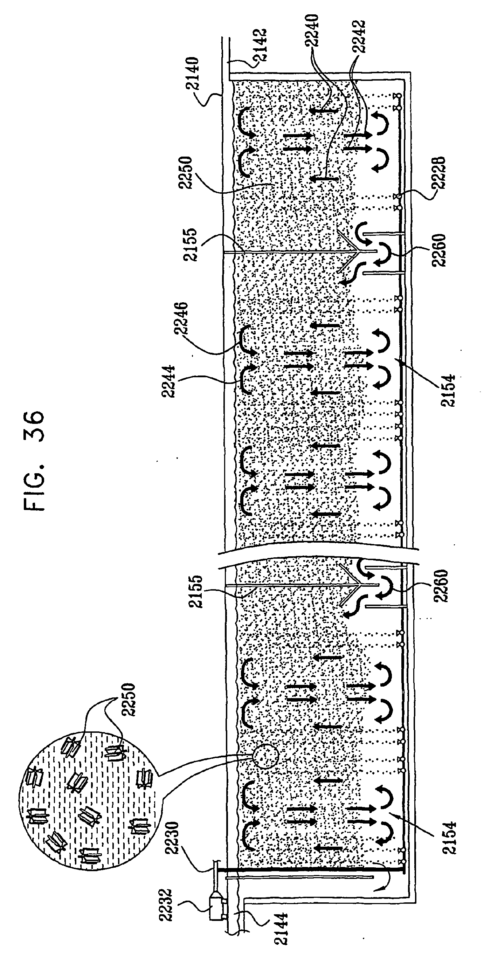

Reference is now made to Fig. 36, which is a sectional illustration corresponding to Fig. 35 and showing water flows and fluidization of particles thereby. It is seen in Fig. 36, that due to the water flows, typified in Figs. 33 and 34, the volume of the bed of particles 2250 increases substantially, as the bed of particles is fluidized.

It is noted that in addition to the water flows indicated by arrows 2240, 2242, 2244 and 2246, there exists a continuous flow of water from the upstream side of the basin 2140 from the waste water inlet 2142 to the treated water outlet 2144. This flow is an undulating flow and includes passage under stage partition assemblies 2155, as indicated by arrows 2260. The passage under stage partition assemblies 2155 is of relatively low volume and generally does not carry floating particles 2250 across the stage partition assemblies 2155, thereby constraining the particles 2250 of each stage to reside within that stage and preventing migration of particles across stage partition assemblies 2155.

It is appreciated that the provision of air diffusers 2228 enables control of flow velocity between adjacent air lifts while providing a high level of aeration to the water in basin 2140.

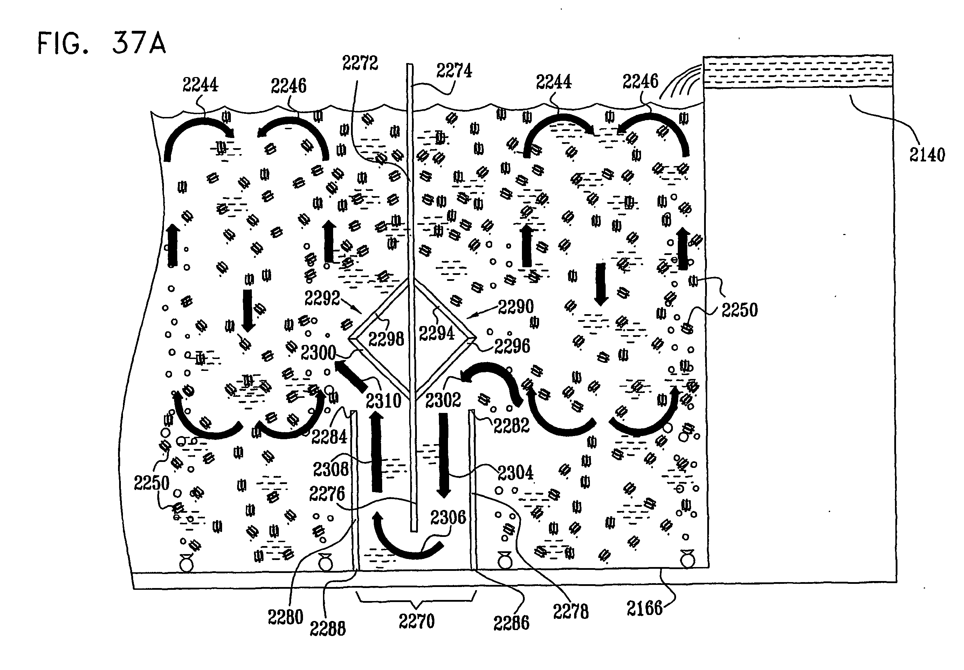

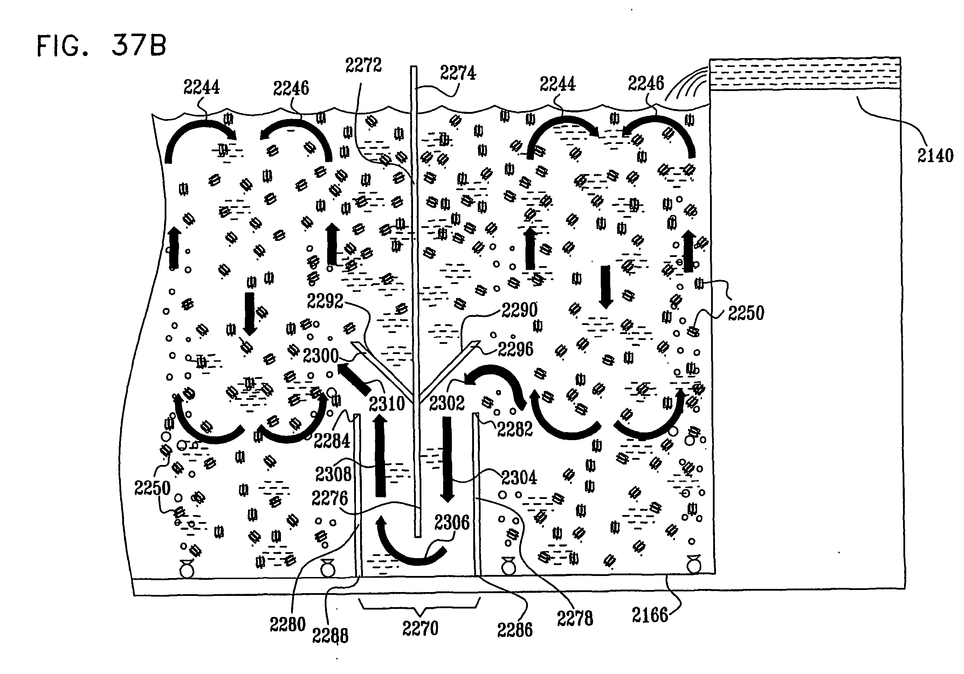

Reference is now made to Figs. 37A and 37B, which are simplified illustrations of two embodiments of a stage partition assembly including a carrier barrier employed in the embodiment of Figs. 31 - 36.

Turning to Fig. 37A, there is seen a stage partition assembly 2270 comprising an upstanding generally vertical partition 2272, a top edge 2274 of which extends above the level of water in basin 2140 and a bottom edge 2276 of which is separated from the bottom 2166 of basin 2140. Disposed adjacent partition 2272 in spaced relationship therewith on both sides thereof are respective upstream and downstream generally vertical partitions 2278 and 2280, having respective top edges 2282 and 2284 which lie below the level of water in basin 2140 and preferably at a level which is less than half of the height of the water in basin 2140 and respective bottom edges 2286 and 2288 which are preferably sealed to the bottom 2166 of basin 2140. Preferably the height of each of partitions 2278 and 2280 is approximately one meter and more generally between approximately 0.5 and 1.5 meters.

Disposed on respective upstream and downstream sides of partition 2272 above and spaced from top edges 2282 and 2284 of respective partitions 2278 and 2280 are inclined flow director assemblies 2290 and 2292, comprising respective pairs of panels 2294 and 2296 and 2298 and 2300. Panels 2294 and 2296 preferably are each inclined with respect to partition 2272 and are mutually angled by 90 - 120 degrees. Similarly, panels 2298 and 2300 preferably are each inclined with respect to partition 2272 and are mutually angled by 90 - 120 degrees.

In accordance with a preferred embodiment of the present invention, partition 2272 is spaced from each of partitions 2278 and 2280 by a distance which is selected such that the water flow velocity therethrough is significantly lower than the free rise velocity of the biomass support elements 2250, in water. Preferably, the flow velocity of water between partition 2272 and partitions 2278 and 2280 is less than one-half of the free rise velocity of the biomass support elements 2250. Determination of the separation distance of the partitions 2278 and 2280 for a given flow velocity made be readily made from the graph presented in Fig. 30, for different water flow rates.

The stage partition assembly 2270 preferably is operable to allow water flow therethrough, as indicated by arrows 2302, 2304, 2306, 2308 and 2310, while generally preventing the passage therethrough of biomass support elements 2250.

Fig. 37B illustrates an alternative embodiment of a stage partition assembly 2320 which is similar to assembly 2270 other than in that panels 2294 and 2298 are eliminated. The operation of assembly 2320 is substantially similar to that of assembly 2270.

## Claims

1. A method for waste water treatment employing at least one basin (740,1140) comprising:
installing generally vertical partitions (752,1155) at spaced locations in said at least one basin (740,1140) in order to divide said at least one basin (740,1140) into a plurality of treatment stage regions;
installing in each of said plurality of treatment stage regions at least one air lift (750,1154);
loading each of said plurality of treatment stage regions, into which at least one air lift (750,1154) is installed, with a quantity of floatable biomass support elements (850,1250);
supplying waste water to at least one of said plurality of treatment stage regions and allowing said waste water, but generally not said biomass support elements (850,1250), to flow from at least one of said plurality of treatment stage regions to at least another of said plurality of treatment stage regions; and
in each of said plurality of treatment stage regions into which at least one air lift (750,1154) is installed, operating said at least one air lift (750,1154) to provide aerobic waste water flow therein in operative engagement with said floatable biomass support elements (850,1250),
said operating producing fluidization of said biomass support elements (850,1250).

2. A method according to claim 1 and wherein:
at least some of said vertical partitions (752,1155) are spaced from a bottom (756,1166) of said at least one basin (740,1140) in order to allow said waste water to flow thereunder between adjacent ones of said plurality of treatment stage regions;
said supplying comprises providing a continuous flow of water from an upstream side of said basin (740,1140) from a waste water inlet (742,1142) to a treated water outlet (744,1144); and
said flow includes passage under stage separation partitions (752,1155) which does not carry floating biomass support elements (850,1250) across said stage separation partition (752,1155), thereby constraining said biomass support elements (850,1250) of each stage to reside within that stage and preventing migration of biomass support elements (850,1250) across stage partition assemblies (752,1155).

3. A method according to claim 1 or claim 2 and wherein said at least one air lift (750) comprises at least one air diffuser (770) disposed underlying a peripheral enclosure (762) which defines a column of water, which column of water is lifted by air diffusing upwardly from said at least one air diffuser (770) through said peripheral enclosure (762).

4. A method according to claim 2 and wherein:
said at least one air lift comprises a plurality of air lift assemblies, wherein each airlift assembly (1154) includes an upstream partition (1156) and a downstream partition (1168);
a first plurality of air diffusers (1226) are disposed at said bottom (1166) of said basin (1140) intermediate the upstream and downstream partitions (1156, 1168) of each airlift assembly;
a second plurality of air diffusers (1228), greater in number than the first plurality of air diffusers (1226) are disposed at said bottom (1166) of said basin (1140) intermediate pairs of adjacent air lift assemblies (1154) and intermediate airlift assemblies (1154) and stage partition assemblies (1155); and
said second plurality of air diffusers (1228) causes water to flow upward between intermediate pairs of adjacent air lift assemblies (1154) and between airlift assemblies (1154) and stage partition assemblies (1155).

5. A method according to claim 1 and wherein said vertical partitions (752,1155) comprise:
a first generally vertical partition (1272) having respective upstream and downstream surfaces, said first generally vertical partition (1272) extending downwardly from a top location above the level of the water in the basin (740,1140) to a bottom location spaced from the bottom (756,1166) of said basin (740,1140) and extending from side to side of said basin (740,1140);
second and third generally vertical partitions (1278,1280) disposed adjacent and in spaced relationship with respect to said upstream and downstream surfaces of said first generally vertical partition (1272), said second and third generally vertical partitions (1278,1280) extending from side to side of said basin (740,1140), and extending upwardly from the bottom (756,1166) of the basin (740,1140) to a top location below the level of water in said basin (740,1140); and
upwardly inclined flow director panels (1290,1292) disposed on respective upstream and downstream surfaces of said first generally vertical partition (1272) and being disposed above and spaced from said second and third generally vertical partitions (1278,1280).

6. A method according to any of claims 1 to 5 and wherein said floatable biomass support elements (1250) comprise:
a plurality of plastic biofilm support elements (1010,1020), formed of a plastic material mixed with a foaming agent, each including a plurality of radially extending surfaces (1012,1022) extending outwardly from a generally solid center (1014,1024),
each of said plurality of support elements (1010,1020) having a maximum dimension which does not exceed 50 mm, a specific gravity of between approximately 0.70-0.91 and a generally cylindrical configuration.

7. A method according to claim 6 and wherein each of said plurality of plastic biofilm support element (1010,1020) has a plurality of roughened biofilm adherence surfaces (1012,1016,1022,1026) integrally formed as one piece therewith.

8. A method according to claim 6 or claim 7 and wherein:
each of said plurality of plastic biofilm support elements (1020) includes a strip (1028) extending over an outwardly facing edge of each of said radially extending surfaces (1022), which radially extending surfaces (1022) are defined by a plurality of radially extending ribs (1026); and
said plurality of surfaces (1022) and said strip (1028) are configured so as to prevent interdigitation between radially extending surfaces (1022) of two separate biofilm support elements (1020).

9. A method according to any of claims 1 to 8 and also comprising installing an anoxic denitrification unit (900) in at least one of said plurality of treatment stage regions.

10. Waste water treatment apparatus for carrying out the process of each one of claims 1 to 9, comprising:
at least one basin (740,1140);
generally vertical partitions (752,1155) located at spaced locations in said at least one basin (740,1140) in order to divide said at least one basin (740,1140) into a plurality of treatment stage regions, at least one of said plurality of treatment stage regions including an anoxic denitrification unit (900), and each of said plurality of treatment stage regions including at least one air lift (750,1154); and
a quantity of floatable biomass support elements (850,1250) loaded into each of said plurality of treatment stage regions which includes at least one air lift (750,1154), whereby supplying waste water to at least one of said plurality of treatment stage regions and allowing said waste water, but generally not said biomass support elements (850,1250), to flow from at least one of said plurality of treatment stage regions to at least another of said plurality of treatment stage regions and operating said at least one air lift (750,1154), in each of said plurality of treatment stage regions which includes at least one air lift (750,1154), provides aerobic waste water flow therein in operative engagement with said floatable biomass support elements (850,1250),
said operating producing fluidization of said biomass support elements (850,1250).

11. Apparatus according to claim 10 and wherein:
at least some of said vertical partitions (752,1155) are spaced from a bottom (756,1166) of said at least one basin (740,1140) in order to allow said waste water to flow thereunder between adjacent ones of said plurality of treatment stage regions;
said supplying comprises providing a continuous flow of water from an upstream side of said basin (740,1140) from a waste water inlet (742,1142) to a treated water outlet (744,1144); and
said flow includes passage under stage separation partitions (752,1155) which does not carry floating biomass support elements (850,1250) across said stage separation partition (752,1155), thereby constraining said biomass support elements (850,1250) of each stage to reside within that stage and preventing migration of biomass support elements (850,1250) across stage partition assemblies (752,1155).

12. Apparatus according to claim 10 or claim 11 and wherein said at least one air lift (750) comprises at least one air diffuser (770) disposed underlying a peripheral enclosure (762) which defines a column of water, which column of water is lifted by air diffusing upwardly from said at least one air diffuser (770) through said peripheral enclosure (762).

13. Apparatus according to claim 11 and wherein:
said at least one air lift comprises a plurality of air lift assemblies, wherein each airlift assembly (1154) includes an upstream partition (1156) and a downstream partition (1168);
a first plurality of air diffusers (1226) are disposed at said bottom (1166) of said basin (1140) intermediate the upstream and downstream partitions (1156, 1168) of each airlift assembly;
a second plurality of air diffusers (1228), greater in number than the first plurality of air diffusers (1226), are disposed at said bottom (1166) of said basin (1140) intermediate pairs of adjacent air lift assemblies (1154) and intermediate airlift assemblies (1154) and stage partition assemblies (1155); and
said second plurality of air diffusers (1228) causes water to flow upward between intermediate pairs of adjacent air lift assemblies (1154) and between air lift assemblies (1154) and stage partition assemblies (1155).

14. Apparatus according to claim 10 and wherein said vertical partitions (752,1155) comprise:
a first generally vertical partition (1272) having respective upstream and downstream surfaces, said first generally vertical partition (1272) extending downwardly from a top location above the level of the water in the basin (740,1140) to a bottom location spaced from said bottom (756,1166) of said basin (740,1140) and extending from side to side of said basin (740,1140);
second and third generally vertical partitions (1278,1280) disposed adjacent and in spaced relationship with respect to said upstream and downstream surfaces of said first generally vertical partition (1272), said second and third generally vertical partitions (1278,1280) extending from side to side of said basin (740,1140), and extending upwardly from the bottom (756,1166) of the basin (740,1140) to a top location below the level of water in said basin (1140); and
upwardly inclined flow director panels (1290,1292) disposed on respective upstream and downstream surfaces of said first generally vertical partition (1272) and being disposed above and spaced from said second and third generally vertical partitions (1278,1280).

15. Apparatus according to any of claims 10 to 14 and wherein said floatable biomass support elements (1250) comprise:
a plurality of plastic biofilm support elements (1010,1020), formed of a plastic material mixed with a foaming agent, each including a plurality of radially extending surfaces (1012,1022) extending outwardly from a generally solid center (1014,1024),
each of said plurality of support elements (1010,1020) having a maximum dimension which does not exceed 50 mm, a specific gravity of between approximately 0.70-0.91 and a generally cylindrical configuration.

16. Apparatus according to claim 15 and wherein each of said plurality of plastic biofilm support element (1010,1020) has a plurality of roughened biofilm adherence surfaces (1012,1016,1022,1026) integrally formed as one piece therewith.

17. Apparatus according to claim 15 or claim 16 and wherein:
each of said plurality of plastic biofilm support elements (1020) includes a strip (1028) extending over an outwardly facing edge of each of said radially extending surfaces (1022), which radially extending surfaces (1022) are defined by a plurality of radially extending ribs (1026); and
said plurality of surfaces (1022) and said strip (1028) are configured so as to prevent interdigitation between radially extending surfaces (1022) of two separate biofilm support elements (1020).

18. Apparatus according to any of claims 10 to 17 and wherein said apparatus includes at least one anoxic de-nitrification unit (900).

## Patentansprüche

1. Verfahren zur Abwasserbehandlung unter Einsatz von wenigstens einem ecken (740,1140), das Folgendes aufweist:
Einbauen allgemein vertikaler Trennwände (752, 1155) an voneinander beabstandeten Stellen in dem genannten wenigstens einen Becken (740, 1140), um das genannte wenigstens eine Becken (740, 1140) in eine Vielzahl von Behandlungsstufenregionen zu unterteilen,
Installieren von wenigstens eine Airlift (750, 1154) in jeder der genannten Vielzahl von Behandlungsstufenregionen,
Beladen jeder der genannten Vielzahl von Behandlungsstufenregionen, in welche wenigstens ein Airlift (750, 1154) installiert ist, mit einer Menge von schwimmfähigen Biomasseträgerelementen (850, 1250),
Zuführen von Abwasser zu wenigstens einer der genannten Vielzahl von Behandlungsstufenregionen und Strömenlassen des genannten Abwassers, aber im Allgemeinen nicht der genannten Biomasseträgerelemente (850, 1250), von wenigstens einer der genannten Vielzahl von Behandlungsstufenregionen zu wenigstens einer weiteren der genannten Vielzahl von Behandlungsstufenregionen und
Betreiben des genannten wenigstens einen Airlifts (750, 1154) in jeder der genannten Vielzahl von Behandlungsstufenregionen, in welche wenigstens ein Airlift (750, 1154) installiert ist, um darin einen aerobischen Abwasserstrom in funktionellen ingriff mit den genannten schwimmfähigen Biomasseträgerelementen (850, 1250) bereitzustellen,
wobei das genannte Betreiben die Fluidisierung der genannten Biomasseträgerelemente (850, 1250) erzeugt.

2. Verfahren nach Anspruch 1 und wobei:
wenigstens einige der genannten vertikalen Trennwände (725, 1155) von einem Boden (756, 1166) des genannten wenigstens einen Beckens (740, 1140) beabstandet sind, um das genannte Abwasser darunter hindurch zwischen benachbarten der genannten Vielzahl von Behandlungsstufenregionen strömen zu lassen,
das genannte Zuführen das Bereitstellen eines kontinuierlichen Wasserstroms von einer zuströmseitigen Seite des genannten Beckens (740, 1140) aus einem Abwassereinlass (742,1142) zu einem Auslass für behandeltes Wasser (744, 1144) aufweist und
der genannte Strom das Hindurchströmen unter Stufenteilungstrennwänden (752, 1155) beinhaltet, das schwimmende Biomasseträgerelemente (850, 1250) nicht über die genannten Stufenteilungstrennwände (725, 1155) trägt, wodurch die genannten Biomasseträgerelemente (850, 1250) jeder Stufe gezwungen werden, sich in dieser Stufe aufzuhalten, und das Wandern von Biomasseträgerelementen (850, 1250) über Stufentrennwandanordnungen (752, 1155) verhindert wird.

3. Verfahren nach Anspruch 1 oder Anspruch 2 und wobei der genannte wenigstens eine Airlift (750) wenigstens einen Luftdiffusor (770) aufweist, der eine Umfangsumgrenzung (762) unterlagernd geordnet ist, welche eine Wassersäule definiert, wobei diese Wassersäule durch von dem genannten wenigstens einen Luftdiffusor (770) aufwärts diffundierender Luft durch die genannte Umfangsumgrenzung (762) gehoben wird,

4. Verfahren nach Anspruch 2 und wobei:
der genannte wenigstens eine Airlift eine Vielzahl von Airliftanordnungen aufweist, wobei jede Airliftanordnung (1154) eine zuströmseitige Trennwand (1156) und eine abströmseitige Trennwand (1168) beinhaltet,
eine erste Vielzahl von Luftdiffusoren (1226) an dem genannten Boden (1166) des genannten Beckens (1140) zwischen der zuströmseitigen und der abströmseitigen Trennwand (1156, 1168) jeder Airliftanordnung angeordnet ist,
eine zweite Vielzahl von Luftdiffusoren (1228), die zahlenmäßig größer ist als die erste Vielzahl von Luftdiffusoren (1226), an dem genannten Boden (1166) des genannten Beckens (1140) zwischen Paaren benachbarter Airliftanordnungen (1154) und zwischen Airliftanordnungen (1154) und Stufentrennwandanordnungen (1155) angeordnet ist und
die genannte zweite Vielzahl von Luftdiffusoren (1228) verursacht, dass Wasser zwischen Paaren benachbarter Airliftanordnungen (1154) und zwischen Airliftanordnungen (1154) und Stufentrennwandanordnungen (1155) aufwärts strömt.

5. Verfahren nach Anspruch 1 und wobei die genannten vertikalen Trennwände (752, 1155) Folgendes aufweisen:
eine erste allgemein vertikale Trennwand (1272) mit einer jeweiligen zu- und abströmseitigen Oberfläche, wobei die genannte erste allgemein vertikale Trennwand (1272) von einer oberen Position über dem Wasserspiegel in dem Becken (740, 1140) abwärts zu einer unteren Position, die von dem Boden (756, 1166) des genannten Beckens (740, 1140) beabstandet ist, verläuft und von einer Seite des genannten Beckens (740, 1140) zur anderen verläuft,
eine zweite und eine dritte allgemein vertikale Trennwand (1278, 1280), die angrenzend an und in beabstandeter Beziehung in Bezug auf die genannte zu- und abströmseitige Oberfläche der genannten ersten allgemein vertikalen Trennwand (1272) angeordnet sind, wobei die genannte zweite und dritte allgemein vertikale Trennwand (1278, 1280) von einer Seite des genannten Beckens (740, 1140) zur anderen verlaufen und von dem Boden (756, 1166) des Beckens (740, 1140) zu einer oberen Position unter dem Wasserspiegel in dem genannten Becken (740,1140) verlaufen, und
aufwärts geneigte Strömungsrichterplatten (1290, 1292), die an der jeweiligen zu- und abströmseitigen Oberfläche der genannten ersten allgemein vertikalen Trennwand (1272) angeordnet sind und die oberhalb der genannten zweiten und dritten allgemein vertikalen Trennwand (1278, 1280) und von ihnen beabstandet angeordnet sind.

6. Verfahren nach einem der Ansprüche 1 bis 5 und wobei die genannten schwimmfähigen Biomasseträgerelemente (1250) Folgendes aufweisen:
eine Vielzahl von Plastik-Biofilmträgerelementen (1010, 1020) aus einem mit einem Schaummittel gemischten Kunststoff, die jeweils eine Vielzahl von radial verlaufenden Oberflächen (10 12, 1022) aufweisen, die sich von einer allgemein festen Mitte (1014,1024) nach außen erstrecken,
wobei jedes der genannten Vielzahl von Trägerelementen (1010, 1020) eine maximale Dimension, die 50 mm nicht übersteigt, eine Dichte zwischen etwa 0,70 und 0,91 und eine allgemein zylindrische Gestaltung hat.

7. Verfahren nach Anspruch 6 und wobei jedes der genannten Vielzahl von Plastik-Biofilmträgerelementen (1010, 1020) eine Vielzahl von angerauten Biofilm-Haftflächen (1012, 1016, 1022, 1026) hat, die mit ihm einstückig an es angeformt sind.

8. Verfahren nach Anspruch 6 oder Anspruch 7 und wobei:
jedes der genannten Vielzahl von Plastik-Biofilmträgerelementen (1020) einen Streifen (1028) aufweist, der über einen nach außen gewandten Rand jeder der genannten radial verlaufenden Oberflächen (1022) verläufe, wobei die radial verlaufenden Oberflächen (1022) von einer Vielzahl von radial verlaufenden Rippen (1026) definiert werden, und
die genannte Vielzahl von Oberflächen (1022) und der genannte Streifen (1028) so gestaltet sind, dass sie den gegenseitigen Eingriff zwischen radial verlaufenden Oberflächen (1022) von zwei separaten Biofilmträgerelementen (1020) verhüten.

9. Verfahren nach einem der Ansprüche 1 bis 8, das auch das Installieren einer anoxischen Entstickungseinheit (900) in wenigstens einer der genannten Vielzahl von Behandlungsstufenregionen aufweist.

10. Abwasserbehandlungsvorrichtun zur Durchführung des Verfahrens nach einem der Ansprüche 1 bis 9, das Folgendes aufweist:
wenigstens ein Becken (740, 1140),
allgemein vertikale Trennwände (752, 1155), die sich an voneinander beabstandeten Stellen in dem genannten wenigstens einen Becken (740, 1140) befinden, um das genannte wenigstens eine Becken (740, 1140) in eine Vielzahl von Behandlungsstufenregionen zu unterteilen, wobei wenigstens eine der genannten Vielzahl von Behandlungsstufenregionen eine anoxische Entstickungseinheit (900) beinhaltet und wobei jede der genannten Vielzahl von Behandlungsstufenregionen wenigstens einen Airlift (750, 1154) beinhaltet, und
eine in jede der genannten Vielzahl von Behandlungsstufenregionen, die wenigstens einen Airlift (750, 1154) beinhaltet, geladene Menge von schwimmfähigen Biomasseträgerelementen (850, 1250), wobei das Zuführen von Abwasser zu wenigstens einer der genannten Vielzahl von Behandlungsstufenregionen und Strömenlassen des genannten Abwassers, aber im Allgemeinen nicht der genannten Biomasseträgerelemente (850, 1250), von wenigstens einer der genannten Vielzahl von Behandlungsstufenregionen zu wenigstens einer weiteren der genannten Vielzahl von Behandlungsstufenregionen und das Betreiben des genannten wenigstens einen Airlifts (750, 1154) in jeder der genannten Vielzahl von Behandlungsstufenregionen, die wenigstens einen Airlift (750, 1154) beinhaltet, darin einen aerobischen Abwasserstrom in fünktionellem Eingriff mit den genannten schwimmfähigen Biomasseträgerelemente (850, 1250) bereitstellt,
wobei das genannte Betreiben die Fluidisierung der genannten Biomasseträgerelemente (850, 1250) erzeugt.

11. Vorrichtung nach Anspruch 10 und wobei:
wenigstens einige der genannten vertikalen Trennwände (725, 1155) von einem Boden (756, 1166) des genannten wenigstens einen Beckens (740, 1140) beabstandet sind, um das genannte Abwasser darunter hindurch zwischen benachbarten der genannten Vielzahl von Behandlungsstufenregionen strömen zu lassen,
das genannte Zuführen das Bereitstellen eines kontinuierlichen Wasserstroms von einer zuströmseitigen Seite des genannten Beckens (740,1140) aus einem Abwassereinlass (742, 1142) zu einem Auslass für behandeltes Wasser (744,1144) aufweist und
der genannte Strom das Hindurchströmen unter Stufenteilungstrennwänden (752, 1155) beinhaltet, das schwimmende Biomasseträgerelemente (850, 1250) nicht über die genannten Stufenteilungstrermwände (725, 1155) trägt, wodurch die genannten Biomasseträgerelemente (850, 1250) jeder Stufe gezwungen werden, sich in dieser Stufe aufzuhalten, und das Wandern von Biomasseträgerelementen (850, 1250) über Stufentrennwandanordnungen (752, 1155) verhindert wird.

12. Vorrichtung nach Anspruch 10 oder Anspruch 11 und wobei der genannte wenigstens eine Airlift (750) wenigstens einen Luftdiffusor (770) aufweist, der eine Umfangsumgrenzung (762) unterlagernd angeordnet ist, die eine Wassersäule definiert, wobei diese Wassersäule durch von dem genannten wenigstens einen Luftdiffusor (770) aufwärts diffundierender Luft durch die genannte Umfangsumgrenzung (762) gehoben wird.

13. Vorrichtung nach Anspruch 11 und wobei:
der genannte wenigstens eine Airlift eine Vielzahl von Airliftanordnungen aufweist, wobei jede Airliftanordnung (1154) eine zuströmseitige Trennwand (1156) und eine abströmseitige Trennwand (1168) beinhaltet,
eine erste Vielzahl von Luftdiffusoren (1226) an dem genannten Boden (1166) des genannten Beckens (1140) zwischen der zuströmseitigen und der abströmseitigen Trennwand (1156, 1168) jeder Airliftanordnung angeordnet ist,
eine zweite Vielzahl von Luftdiffusoren (1228), die zahlenmäßig größer ist als die erste Vielzahl von Luftdiffusoren (1226), an dem genannten Boden (1166) des genannten Beckens (1140) zwischen Paaren benachbarter Airliftanordnungen (1154) und zwischen Airliftanordnungen (1154) und Stufentrennwandanordnungen (1155) angeordnet ist und
die genannte zweite Vielzahl von Luftdiffusoren (1228) verursacht, dass Wasser zwischen Paaren benachbarter Airliftanordnungen (1154) und zwischen Airliftanordnungen (1154) und Stufentrennwandanordnungen (1155) aufwärts strömt.

14. Vorrichtung nach Anspruch 10 und wobei die genannten vertikalen Trennwände (752, 1155) Folgendes aufweisen:
eine erste allgemein vertikale Trennwand (1272) mit einer jeweiligen zu- und abströmseitigen Oberfläche, wobei die genannte erste allgemein vertikale Trennwand (1272) von einer oberen Position über dem Wasserspiegel in dem Becken (740, 1140) abwärts zu einer unteren Position, die von dem genannten Boden (756, 1166) des genannten Beckens (740, 1140) beabstandet ist, verläuft und von einer Seite des genannten Beckens (740, 1140) zur anderen verläuft,
eine zweite und eine dritte allgemein vertikale Trennwand (1278, 1280), die angrenzend an und in beabstandeter Beziehung in Bezug auf die genannte zu- und abströmseitige Oberfläche der genannten ersten allgemein vertikalen Trennwand (1272) angeordnet sind, wobei die genannte zweite und dritte allgemein vertikale Trennwand (1278, 1280) von einer Seite des genannten Beckens (740, 1140) zur anderen verlaufen und von dem Boden (756, 1166) des Beckens (740, 1140) zu einer oberen Position unter dem Wasserspiegel in dem genannten Becken (1140) verlaufen, und
aufwärts geneigte Strömungsrichterplatten (1290, 1292), die an der jeweiligen zu- und abströmseitigen Oberfläche der genannten ersten allgemein vertikalen Trennwand (1272) angeordnet sind und die oberhalb der genannten zweiten und dritten allgemein vertikalen Trennwand (1278, 1280) und von ihnen beabstandet angeordnet sind.

15. Vorrichtung nach einem der Ansprüche 10 bis 14 und wobei die genannten schwimmfähigen Biomasseträgerelemente (1250) Folgendes aufweisen:
eine Vielzahl von Plastik-Biofilmträgerelementen (1010, 1020) aus einem mit eine Schaummittel gemischten Kunststoff, die jeweils eine Vielzahl von radial verlaufenden Oberflächen (1012, 1022) aufweisen, die sich von einer allgemein festen Mitte (1014, 1024) nach außen erstrecken,
wobei jedes der genannten Vielzahl von Trägerelementen (1010, 1020) eine maximale Dimension, die 50 mm nicht übersteigt, eine Dichte zwischen etwa 0,70 und 0,91 und eine allgemein zylindrische Gestaltung hat.

16. Vorrichtung nach Anspruch 15 und wobei jedes der genannten Vielzahl von Plastik-Biofilmträgerelementen (1010, 1020) eine Vielzahl von angerauten Biofilm-Haftflächen (1012, 1016, 1022, 1026) hat, die mit ihm einstückig an es angeformt sind.

17. Vorrichtung nach Anspruch 15 oder Anspruch 16 und wobei:
jedes der genannten Vielzahl von Plastik-Biofilmträgerelementen (1020) einen Streifen (1028) aufweist, der über einen nach außen gewandten Rand jeder der genannten radial verlaufenden Oberflächen (1022) verläuft, wobei die radial verlaufenden Oberflächen (1022) von einer Vielzahl von radial verlaufenden Rippen (1026) definiert werden, und
die genannte Vielzahl von Oberflächen (1022) und der genannte Streifen (1028) so gestaltet sind, dass sie den gegenseitigen Eingriff zwischen radial verlaufenden Oberflächen (1022) von zwei separaten Biofilmträgerelementen (1020) verhüten.

18. Vorrichtung nach einem der Ansprüche 10 bis 17 und wobei die genannte Vorrichtung wenigstens eine anoxische Entstickungseinheit (900) aufweist.

## Revendications

1. Procédé destiné au traitement des eaux usées faisant intervenir au moins un bassin (740, 1140), comprenant les opérations consistant à :
installer des cloisons verticales de manière générale (752, 1155) au niveau d'emplacements espacés dans ledit au moins un bassin (740, 1140) afin de diviser ledit au moins un bassin (740, 1140) en une pluralité de régions à phase de traitement ;
installer au moins un dispositif agitateur d'air, désigné ci-après Air-lift, (750, 1154) dans chaque région de ladite pluralité de régions à phase de traitement ;
charger chaque région de ladite pluralité de régions à phase de traitement, dans laquelle au moins un Air-lift (750, 1154) est installé, avec une certaine quantité d'éléments de support flottants de biomasse (850, 1250) ;
acheminer des eaux usées à une région au moins de ladite pluralité de régions à phase de traitement et autoriser lesdites eaux usées, mais pas de manière générale lesdits éléments de support de biomasse (850, 1250), à s'écouler depuis au moins une région de ladite pluralité de régions à phase de traitement vers au moins une autre région de ladite pluralité de régions à phase de traitement ; et
dans chaque région de ladite pluralité de régions à phase de traitement, dans laquelle au moins un Air-lift (750, 1154) est installé, faire fonctionner ledit au moins un Air-lift (750, 1154) afin d'assurer dans celle-ci un flux d'eaux usées en aérobiose en solidarisation opérationnelle avec lesdits éléments de support flottants de biomasse (850, 1250),
ledit fonctionnement produisant la fluidisation desdits éléments de support de biomasse (850, 1250).

2. Procédé selon la revendication 1, et :
au moins certaines desdites cloisons verticales (752, 1155) étant espacées par rapport à un fond (756, 1166) dudit au moins un bassin (740, 1140) afin de permettre auxdites eaux usées de couler sous celles-ci entre des régions adjacentes de ladite pluralité de régions à phase de traitement ;
ledit acheminement comprenant l'opération consistant à fournir un flux continu d'eau depuis un côté amont dudit bassin (740, 1140) à partir d'un orifice d'admission d'eaux usées (742, 1142) vers un orifice de sortie d'eaux traitées (744, 1144) ; et
ledit écoulement comprenant le passage sous des cloisons de séparation de phases (752, 1155) qui ne fait pas passer des éléments de support flottants de biomasse (850, 1250) en travers de ladite cloison de séparation de phases (752, 1155), ce qui contraint par conséquent lesdits éléments de support de biomasse (850,1250) de chaque phase à rester dans cette phase et à empêcher la migration des éléments de support de biomasse (850, 1250) à travers des ensembles cloisons de phases (752, 1155).

3. Procédé selon la revendication 1 ou la revendication 2, et ledit au moins un Air-lift (750) comportant au moins un diffuseur d'air (770) disposé en position sous-jacente à une enceinte périphérique (762) qui définit une colonne d'eau, cette colonne d'eau étant soulevée en vertu de la diffusion d'air vers le haut provenant dudit au moins un diffuseur d'air (770) à travers ladite enceinte périphérique (762).

4. Procédé selon la revendication 2, et :
ledit au moins un Air-lift comportant une pluralité d'ensembles Air-lift, alors que chaque ensemble Air-lift (1154) comporte une cloison amont (1156) et une cloison aval (1168) ;
une première pluralité de diffuseurs d'air (1226) étant disposée au niveau dudit fond (1166) dudit bassin (1140) entre les cloisons amont et aval (1156, 1168) de chaque ensemble Air-lift ;
une deuxième pluralité de diffuseurs d'air (1228), en plus grand nombre que la première pluralité de diffuseurs d'air (1226), étant disposée au niveau dudit fond (1166) dudit bassin (1140) entre des paires d'ensembles Air-lift adjacentes (1154) et entre des ensembles Air-lift (1154) et des ensembles cloisons de phases (1155) ; et
ladite deuxième pluralité de diffuseurs d'air (1228) obligeant l'eau à couler vers le haut entre des paires d'ensembles Air-lift adjacentes (1154) et entre des ensembles Air-lift (1154) et des ensembles cloisons de phases (1155).

5. Procédé selon la revendication 1, et lesdites cloisons verticales (752, 1155) comprenant :
une première cloison verticale de manière générale (1272) avec des surfaces amont et aval respectives, ladite première cloison verticale de manière générale (1272) se prolongeant vers le bas à partir d'un emplacement supérieur situé au-dessus du niveau de l'eau dans le bassin (740, 1140) vers un emplacement inférieur qui est espacé du fond (756, 1166) dudit bassin (740, 1140) et se prolongeant d'un côté à l'autre dudit bassin (740, 1140);
des deuxième et troisième cloisons verticales de manière générale (1278, 1280) disposées en position adjacente et en relation d'espacement par rapport auxdites surfaces amont et aval de ladite première cloison verticale de manière générale (1272), alors que lesdites deuxième et troisième cloisons verticales de manière générale (1278, 1280) se prolongent d'un côté à l'autre dudit bassin (740, 1140), et se prolongent vers le haut à partir du fond (756, 1166) du bassin (740, 1140) vers un emplacement supérieur situé en dessous du niveau de l'eau dans ledit bassin (740, 1140) ; et
des panneaux dirigeurs de flux inclinés vers le haut (1290, 1292) disposés sur des surfaces ont et aval respectives de ladite première cloison verticale de manière générale (1272) et étant disposés au-dessus desdites deuxième et troisième cloisons verticales de manière générale (1278, 1280), et espacés de ces dernières.

6. Procédé selon l'une quelconque des revendications 1 à 5, et lesdits éléments de support flottants de biomasse (1250) comprenant :
une pluralité d'éléments de support de film biologique en plastique (1010, 1020), formée avec une matière plastique mélangée à un agent moussant, chacun incluant une pluralité de surfaces se prolongeant dans le plan radial (1012, 1022) lesquelles se prolongent vers l'extérieur à partir d'un centre plein de manière générale (1014, 1024),
chaque élément de ladite pluralité d'éléments de support (1010, 1020) ayant une dimension maximum qui ne dépasse as 50 mm, une densité située entre 0,70 et 0,91 environ et une configuration cylindrique de manière générale.

7. Procédé selon la revendication 6, et chaque élément de ladite pluralité d'éléments de support de film biologique en plastique (1010, 1020) présentant une pluralité de surfaces d'adhérence rugueuses pour film biologique (1012, 1016, 1022, 1026) lesquelles sont formées pour en faire partie intégrante en tant que pièce d'un seul tenant.

8. Procédé selon la revendication 6 ou la revendication 7, et :
chaque élément de ladite pluralité d'éléments de support de film biologique en plastique (1020) incluant une bande (1028) laquelle se prolonge au-dessus d'un bord dirigé vers l'extérieur de chacune desdites surfaces se prolongeant dans le plan radial (1022), ces surfaces se prolongeant dans le plan radial (1022) étant définies par une pluralité de nervures se prolongeant dans le plan radial (1026) ; et
ladite pluralité de surfaces (1022) et ladite bande (1028) étant configurées de sorte à empêcher tout engrènement entre les surfaces se prolongeant dans le plan radial (1022) de deux éléments de support de film biologique individuels (1020).

9. Procédé selon l'une quelconque des revendications 1 à 8, et comprenant également l'opération consistant à installer une unité de dénitrification anoxique (900) dans au moins une région de ladite pluralité de régions à phase de traitement.

10. Appareil de traitement des eaux usées destiné à réaliser le processus de chacune des revendications 1 à 9, comprenant :
au moins un bassin (740, 1140) ;
des cloisons verticales de manière générale (752, 1155) au niveau d'emplacements espacés dans ledit au moins un bassin (740, 1140) afin de diviser ledit au moins un bassin (740, 1140) en une pluralité de régions à phase de traitement, alors qu'au moins une région de ladite pluralité de régions à phase de traitement comporte une unité de dénitrification anoxique (900), et chaque région de ladite pluralité de régions à phase de traitement comporte au moins un Air-lift (750, 1154) ; et
une certaine quantité d'éléments de support flottants de biomasse (850, 1250) chargée dans chaque région de pluralité de régions à phase de traitement qui comporte au moins un Air-lift (750, 1154), permettant ainsi d'acheminer des eaux usées à une région au moins de ladite pluralité de régions à phase de traitement et d'autoriser lesdites eaux usées, mais pas de manière générale lesdits éléments de support de biomasse (850, 1250), à s'écouler depuis au moins une région de ladite pluralité de régions à phase de traitement vers au moins une autre région de ladite pluralité de régions à phase de traitement et de faire fonctionner ledit au moins un Air-lift (750, 1154), dans chaque région de ladite pluralité de régions à phase de traitement qui contient au moins un Air-lift (750, 1154), assurant dans celle-ci un flux d'eaux usées en aérobiose en solidarisation opérationnelle avec lesdits éléments de support flottants de biomasse (850, 1250),
ledit fonctionnement produisant la fluidisation desdits éléments de support de biomasse (850, 1250).

11. Appareil selon la revendication 10, et :
au moins certaines desdites cloisons verticales (752,1155) étant espacées par rapport à un fond (756, 1166) dudit au moins un bassin (740, 1140) afin de permettre auxdites eaux usées de couler sous celles-ci entre des régions adjacentes de ladite pluralité de régions à phase de traitement ;
ledit acheminement comprenant l'opération consistant à fournir un flux continu d'eau depuis un côté dudit bassin (740, 1140) à partir d'un orifice d'admission d'eaux usées (742, 1142) vers un orifice de sortie d'eaux traitées (744, 1144) ; et
ledit écoulement comprenant le passage sous des cloisons de séparation de phases (752, 1155) qui ne fait pas passer des éléments de support flottants de biomasse (850,1250) en travers de cloison de séparation de phases (752, 1155), ce qui contraint par conséquent lesdits éléments de support de biomasse (850,1250) de chaque phase à rester dans cette phase et à empêcher la migration des éléments de support de biomasse (850, 1250) à travers des ensembles cloisons de phases (752, 1155).

12. Appareil selon la revendication 10 ou la revendication 11, et ledit au moins un Air-lift (750) comportant au moins un diffuseur d'air (770) disposé en position sous-jacente à une périphérique (762) qui définit une colonne d'eau, cette colonne d'eau étant soulevée en vertu de la diffusion d'air vers le haut provenant dudit au moins un diffuseur d'air (770) à travers ladite enceinte périphérique (762).

13. Appareil selon la revendication 11, et :
ledit au moins un Air-lift comportant une pluralité d'ensembles Air-lift, alors que chaque ensemble Air-lift (1154) comporte une cloison amont (1156) et une cloison aval (1168);
une première pluralité de diffuseurs d'air (1226) étant disposée au niveau dudit fond (1166) dudit bassin (1140) entre les cloisons amont et aval (1156, 1168) de chaque ensemble Air-lift ;
une deuxième pluralité de diffuseurs d'air (1228), un plus grand nombre que la première pluralité de diffuseurs d'air (1226), étant disposée au niveau dudit fond (1166) dudit bassin (1140) entre des paires d'ensembles Air-lift adjacentes (1154) et entre des ensembles Air-lift (1154) et des ensembles cloisons de phases (1155) ; et
ladite deuxième pluralité de diffuseurs d'air (1228) obligeant l'eau à couler vers le haut entre des paires d'ensembles Air-lift adjacentes (1154) et entre des ensembles Air-lift (1154) et des ensembles cloisons de phases (1155).

14. Appareil selon la revendication 10, et lesdites cloisons verticales (752, 1155) comprenant :
une première cloison verticale de manière générale (1272) avec des surfaces amont et aval respectives, ladite première cloison verticale de manière générale (1272) se prolongeant vers le bas à partir d'un emplacement supérieur situé au-dessus du niveau de l'eau dans le bassin (740, 1140) vers un emplacement inférieur qui est espacé dudit fond (756, 1166) dudit bassin (740, 1140) et se prolongeant d'un côté à l'autre dudit bassin (740, 1140) ;
des deuxième et troisième cloisons verticales de manière générale (1278, 1280) disposées en position adjacente et en relation d'espacement par rapport auxdites surfaces amont et aval de ladite première cloison verticale de manière générale (1272), alors que lesdites deuxième et troisième cloisons verticales de manière générale (1278, 1280) se prolongent d'un côté à l'autre dudit bassin (740, 1140), et se prolongent vers le haut à partir du fond (756, 1166) du bassin (740, 1140) vers un emplacement supérieur situé en dessous du niveau de l'eau dans ledit bassin (1140) ; et
des panneaux dirigeurs de flux inclinés vers le haut (1290, 1292) disposés sur des surfaces amont et aval respectives de ladite première cloison verticale de manière générale (1272) et étant disposés au-dessus desdites deuxième et troisième cloisons verticales de manière générale (1278, 1280), et espacés de ces dernières.

15. Appareil selon l'une quelconque des revendications 10 à 14, et lesdits éléments de support flottants de biomasse (1250) comprenant :
une pluralité d'éléments de support de film biologique en plastique (1010, 1020), formée avec une matière plastique mélangée à un agent moussant, chacun incluant une pluralité de surfaces se prolongeant dans le plan radial (1012, 1022) lesquelles se prolongent vers l'extérieur à partir d'un centre plein de manière générale (1014,1024),
chaque élément de ladite pluralité d'éléments de support (1010, 1020) ayant une dimension maximum qui ne pas 50 mm, une densité située entre 0,70 et 0,91 environ et une configuration cylindrique de manière générale.

16. Appareil selon la revendication 15, et chaque élément de ladite pluralité d'éléments de support de film biologique en plastique (1010, 1020) présentant une pluralité de surfaces d'adhérence rugueuses pour film biologique (1012, 1016, 1022, 1026) lesquelles sont formées pour en faire partie intégrante en tant que pièce d'un seul tenant.

17. Appareil selon la revendication 15 ou la revendication 16, et :
chaque élément de ladite pluralité d'éléments de support de film biologique en plastique (1020) incluant une bande (1028) laquelle se prolonge au-dessus d'un bord dirigé vers l'extérieur de chacune desdites surfaces se prolonge dans le plan radial (1022), ces surfaces se prolongeant dans le plan radial (1022) étant définies par une pluralité de nervures se prolongeant dans le plan radial (1026) ; et
ladite pluralité de surfaces (1022) et ladite bande (1028) étant configurées de sorte à empêcher tout engrènement entre les surfaces se prolongeant dans le plan radial (1022) de eux éléments de support de film biologique individuels (1020).

18. Appareil selon l'une quelconque des revendications 10 à 17, et ledit appareil englobant au moins une unité de dénitrification anoxique (900).
